# EUROPÄISCHE PATENTSCHRIFT

(11) **EP 4 307 914 B1**
(45) Veröffentlichungstag und Bekanntmachung des Hinweises auf die Patenterteilung: **19.02.2025**
(21) Anmeldenummer: 22717079.2
(22) Anmeldetag: 18.03.2022
(51) Int. Cl.: A23K 20/163, A23K 40/30, A23K 50/48, B65D 65/46

(54) **HUNDESACHET**
DOG SACHET
SACHET POUR CHIEN

(30) Priorität: 18.03.2021 CH 2932021
(43) Veröffentlichungstag der Anmeldung: 24.01.2024
(73) Patentinhaber: Louids AG, 5443 Niederrohrdorf (CH)
(72) Erfinder: DOBUSCH, Lisa, 5443 Niederrohrdorf (CH); ENCHELMAIER, Volker, 4310 Rheinfelden (CH); ENCHELMAIER, Nico, 5443 Niederrohrdorf (CH)
(74) Vertreter: Latscha Schöllhorn Partner AG
(86) Internationale Anmeldenummer: PCT/EP2022/057211
(87) Internationale Veröffentlichungsnummer: WO 2022/195095

(56) Entgegenhaltungen:
- GB-A- 2 170 092
- US-A1- 2019 193 928
- US-A1- 2020 024 044
- BARRET AXEL: "Bioplastics Packaging for Energy Gel - Bioplastics News", 1 January 2018 (2018-01-01), XP055824539, Retrieved from the Internet <URL:https://bioplasticsnews.com/2018/10/29/bioplastics-packaging-for-energy-gel/> [retrieved on 20210715]
- ANONYMOUS: "Just Eat trials compostable seaweed-based sauce sachets", ALGAE WORLD NEWS, 1 January 2018 (2018-01-01), XP055825084, Retrieved from the Internet <URL:https://news.algaeworld.org/2018/07/just-eat-trials-compostable-seaweed-based-sauce-sachets/#more-39168> [retrieved on 20210716]
- ANONYMOUS: "Waterbite: Gelled water for traveling with dogs > Dog Jaunt", 20 December 2009 (2009-12-20), XP055825015, Retrieved from the Internet <URL:https://www.dogjaunt.com/2009/12/waterbite-gelled-water-for-traveling-with-dogs/> [retrieved on 20210716]
- ANONYMOUS: "H2O Hydration Gel for Pets | Pet Electronic Systems Weblog", 1 January 2008 (2008-01-01), XP055825024, Retrieved from the Internet <URL:https://blazerbaby.wordpress.com/h2o-hydration-gel-for-pets/> [retrieved on 20210716]

## Beschreibung

### Technisches Gebiet

Die Erfindung betrifft ein verzehrbares Sachet zur mobilen Flüssigkeitsversorgung von insbesondere Hunden gemäss dem einleitenden Teil des unabhängigen Anspruchs 1.

Oftmals kann die Flüssigkeitsversorgung von Hunden unterwegs bzw. in den mobilen Schnittstellen eines Hundebesitzer-Alltags, d.h. insbesondere bei Spaziergängen und auf Reisen (Urlaubsreisen oder Tagesausflüge, inklusive Autofahrten) sowie weiteren Schnittstellen für das Erfordernis einer Flüssigkeitsaufnahme (Restaurantbesuche, Stadttouren, sportliche Aktivitäten mit dem Hundebesitzer wie etwa Joggen, Fahrradtouren oder Wanderungen, u.v.m.), nicht in einem ausreichenden Umfang gewährleistet werden, da keine entsprechenden Wasserquellen oder Tränken verfügbar sind und/oder sich der Hundebesitzer der Problematik einer möglichen Unterversorgung nicht bewusst ist.

Bei Spaziergängen sind Hunde einer hohen physischen, dehydrierenden Belastung durch die gesteigerte Aktivität und Beanspruchung des Bewegungsapparates in Kombination mit weiteren Rahmenbedingungen, wie beispielweise veränderten klimatischen Umfeldbedingungen, ausgesetzt. Hinzukommen weitere, damit verbundene Belastungsansprüche wie der Aktionsbereich von mit dem Spaziergang möglicherweise verbundenen Autofahrten, welche ebenfalls flüssigkeitsentziehende Auswirkungen für den Hundeorganismus mit sich bringen.

Vor diesem Hintergrund ist eine mobile Flüssigkeitsversorgung neben der stationären (Haupt-)Versorgung (d.h. insbesondere dem heimischen Wasser- bzw. Trinknapf) unabdingbar ergänzend in den Alltag des Hundes zu integrieren. Ohne eine Flüssigkeitsversorgungsquelle mit dem Hund unterwegs zu sein, kann zu erheblichen dehydrierenden Auswirkungen und somit zu einem verschlechterten Wohlbefinden (körperliche und geistige Trägheit, Müdigkeit), einer geringeren Vitalität (physiologischer und energetischer Art) sowie auch zu einer kreislaufbedingten Symptomatik führen.

Sehr häufig steht im Alltag von Hund und Hundebesitzer (Rolle der Bedürfniserkennung und -erfüllung), die Nahrungsaufnahme unbewusst mehr im Fokus als eine ebenso wichtiger gestellte regelmässige, konstante und hinreichende mobile und stationäre Flüssigkeitsversorgung und -aufnahme. Diese Erkenntnis ist zum einen zurückzuführen auf eine fehlende Aufklärung betreffend der Wichtigkeit einer mobilen, sowie jedoch auch einer generellen, regelmässigen und kontrollierten Flüssigkeitsversorgung, und zum anderen, auf eine fehlende gesamtheitlich erschlossene mobile Produktlösung in Bezug auf eine korrelierende Komposition aus Hund, Hundebesitzer und Umwelt- sowie mobile Umfeldbedingungen. Es besteht ein enger, synergetischer Zusammenhang zwischen mobiler und stationärer Flüssigkeitsversorgung eines Hundes. Dabei handelt es sich um den wechselseitigen Kreislauf aus stationärer Flüssigkeitsversorgung (Hauptversorgungsquelle), welche die mobile Flüssigkeitsversorgung mit einer vorausgehenden, grundlegenden Hydrierung unterstützt, und mobiler Flüssigkeitsversorgung (situative Ergänzungsquelle), welche sowohl der mobil-hydrierenden Stillung eines akuten Durstgefühls dient als auch die stationäre Flüssigkeitsversorgung, im Sinne der Erreichung des Tagesmengenbedarfs, mit ergänzt.

Zudem wird der Aspekt der mangelnden Flüssigkeitsversorgung durch die stark steigende Anzahl an Menschen, welche sich zum ersten Mal einen Hund zulegen und die Position des Hundebesitzers einnehmen bzw. durch deren Unerfahrenheit begünstigt. Die mobile Flüssigkeitsversorgung von Hunden anhand der derzeitig verfügbaren Methoden für eine entsprechende Bedürfnisabdeckung, findet etwa in Bezug auf die mobilen Schnittstellen überwiegend in konventioneller Lösungsform, d.h. in Form von befüllten Trinkflaschen und/oder portablen Hunde(-reise-)näpfen, und in vereinzelten Anwendungsfällen anhand von marktbezogenen mobilen Transportbehältnissen, wie etwa Reisetrinkflaschen und anderen Kombinationssystemen, statt.

### Stand der Technik

So ist etwa aus der DE 20 2004 012 452 U1 ein Trinknapf zur Aufnahme und Sicherung von Wasser bekannt, der bei Turbulenzen Tieren das Trinken ohne Auslaufen ermöglicht. Dabei werden zwei Trinknäpfe übereinandergestellt, wobei der obere Trinknapf einen gekürzten Wasserboden in Verbindung mit Seitenschrägen haben muss und durch diese Öffnung das Tier mit seiner Zunge das Wasser im Boden des unteren Trinknapfes erreichen kann.

Weiterhin offenbart die US 10,028,484 B2 eine tragbare Kombination aus Reisebecher und Wasserschale, die verwendet wird, um Wasser zu speichern und Wasser abzugeben, so dass es ein Hund trinken kann, und welche anschliessend ermöglicht, dass das nicht verbrauchte Wasser in den Reisebecher zurückgeführt werden kann. Die Wasserflasche umfasst hierzu einen oberen Abschnitt, einen unteren Abschnitt und einen inneren vertieften Abschnitt, der es ermöglicht, die Flasche zusammenzudrücken, um durch einen Strohhalm Wasser aus der Flasche in den Hundenapf zu drücken und wobei gleichzeitig eine ausreichende Steifheit bereitgestellt wird, so dass die Flasche durch das Zusammendrücken nicht dauerhaft deformiert wird. Die Wasserflasche ist des Weiteren so konzipiert, dass sie in einen Standardbehälter für Autogetränkebehälter passt und dort aufbewahrt werden kann.

Derartige mobile Transportbehältnisse, welche im Sinne eines Kombinationssystems aus Transportflasche, Trinknapf und zusätzlich einzufüllender Flüssigkeit entwickelt und angeboten werden, vermögen jedoch nicht das Kriterium einer einfach einsetzbaren, belohnenden und ganzheitlich erschlossenen Bedürfnistiefe einer mobilen Flüssigkeitsversorgung von Hunden zu lösen. Es handelt sich hierbei zwar grundsätzlich um funktionellere und mobilere Ausgestaltungen, die Kernproblematik bleibt jedoch weiterhin bestehen. Der Hund muss an ein neues Trinkgefäss gewöhnt werden und bei dieser Lösungsform kommt es ggf. dazu, dass ein wesentlicher Anteil an Wasser verspritzt, oder sich der Hund wie auch beim heimischen, stationären Trinknapf verschluckt und dieses somit verloren geht, sowie dass das übrig gebliebene Wasser/die übrig gebliebene Flüssigkeit im Anschluss an den Spaziergang ungenutzt weggeleert werden muss und der Hund erneut unversorgt in der mobilen Schnittstelle zurückbleibt. Somit wird die gegenwärtig zugängliche mobile Flüssigkeitsaufnahme aufgrund eines geringen Differenzierungsabstands und keiner bedürfnisorientierten Neuheitsprägung durch den Hund mit einer begrenzten Belohnungsassoziation wahrgenommen.

Zudem kann es gerade bei einem starken Durstgefühl des Hundes dazu kommen, dass dieser mehr Wasser/Flüssigkeit verspritzt, als er effektiv über die Trinktechnik des löffelgeformten Zungenmuskels aufnehmen kann, so dass es häufig, auch aufgrund des nicht optimal kontrollfähigen Aggregatszustands "flüssig (fluid) bzw. zu fliessfähig/zähflüssig (weich-viskos bis viskos)" und der nicht vorhandenen Vorportionierung eines bestimmen Mengenverhältnisses, zu einem Verschlucken bei der Flüssigkeitsaufnahme aus solchen mobilen Transportgefässen kommt. Schliesslich gestaltet sich der Aufwand für den Hundebesitzer im Zuge der Vorbereitung, dem Transport und der Anwendung vor Ort sowie der hygienischen Behandlung des Gefässes nach dem Gebrauch als sehr hoch, (be-)nutzer- und einsatzunfreundlich und komplex (zeitaufwändig). Damit kann festgehalten werden, dass die mobilen Lösungen von heute gar nicht so mobil und lösungsorientiert sind, wie es auf den ersten Blick scheint.

Dieser Aspekt steht in keinem ausgewogenen Verhältnis zum immer weiter steigenden, emanzipationsbedingten, dynamischen Alltag einer Vielzahl von Hundebesitzern, sowie einer zunehmenden Urbanisierung (Städtedrang), bei welcher im Zuge von Spaziergängen mit Hunden die Begrifflichkeit der "Mobilität" als unabdingbar einzuordnen ist. Bis zum heutigen Status Quo des Innovationsstands hat sich keine der bestehenden Produktlösungen für die mobile Flüssigkeitsversorgung von Hunden in den Alltag von Besitzern und Hunden auf eine solche Art und Weise integriert, dass diese als eine alle Bedürfnisbereiche von Hund und Hundebesitzer abdeckende Lösung im Sinne der Positionierung eines Grundbedürfnisprodukts bezeichnet werden könnte.

Es besteht somit das Bedürfnis nach einer mobilen Flüssigkeitversorgungslösung, die insbesondere auch die sensorische Präferenz von Hunden erfüllt und wie Belohnungssnacks vorportioniert als Ganzes über die Hand gegeben und vom Hund konsumiert werden kann.

XP055825015 beschreibt zwar ein Gelprodukt zur Flüssigkeitsversorgung von Haustieren bzw. Hunden, welches ohne eine verzehrbare Umhüllung ausgebildet ist. Hierbei handelt es sich um ein sehr festes Gel, das jeweils mit einem Portionsgewicht von 8 Unzen (ca. 230 g) als ein gesamtes Gel-Stück in einem Kunststoffschlauchbeutel verpackt ist. Für die mobile Anwendung muss das Gel-Stück vom Hundehalter erst noch händisch in kleinere, maulgerechte Portionen gebrochen werden. Ohne eine direkt angefügte verzehrbare Umhüllung kann u.a. auch keine niedrig gelierte Flüssigkeit verwendet werden, die für eine schnelle und vollständige gastrointestinale Flüssigkeitsfreisetzung aus dem dreidimensionalen Gelnetzwerk entscheidend sein kann. Die niedrige bruchmechanische Grenze eines solchen Gels würde dazu führen, dass es schon bei leichterer Beanspruchung zerfällt, sowie ggf. unter partiellem Flüssigkeitsaustritt aufbricht.

Eine natürliche Umhüllung wird wiederrum in US 2020/0024044 A1 und XP055824539 genannt. Genauer beschreiben sie eine biologisch abbaubare Einwegverpackung (Behälter) aus pflanzlichem Biokunststoff für einen nachhaltigen Konsum von insbesondere viskosen bzw. fliessfähigen Energy Gels, welche bei Ausdauersportarten (bspw. Laufen oder Radfahren) zum Einsatz kommen. Generell soll die Verpackung 1-2 Unzen (ca. 30-60 g) einer gelartigen oder anderweitigen viskosen Flüssigkeit zur sofortigen Nahrungsergänzung enthalten. Durch die entsprechende Viskosität besitzt das Abfüllprodukt offensichtlich immer eine dominierende Fliesseigenschaft. Bei derartigen gelartigen Flüssigkeiten, wie den meisten Energy Gels, handelt es sich technisch um keine Gele, sondern um Flüssigkeiten mit einer zähflüssigen Konsistenz.

Gegenstand von US 2020/0024044 A1 und XP055824539 ist, das Material von ansonsten umweltunfreundlichen Einwegverpackungen für Sportnahrung nachhaltiger zu machen, ohne dabei das Abfüllprodukt spezifisch zu modifizieren. Die Anwendung des Endprodukts ist letztlich mit der am Markt existierenden, herkömmlichen Single-Use-Packaging-Methode vergleichbar - seitlich erstreckende Lasche aufreissen, Flüssigkeit rausquetschen und aussagen, um es dann anschliessend wegzuwerfen. Das Wegwerfen des Beutels kann allerdings über den Boden erfolgen, wo er durch natürliche Faktoren (bspw. Regen) über mehrere Tage biologisch abgebaut wird. Eine spezifische Bearbeitung des Gesamtverzehrs von Umhüllung und Inhalt findet in US 2020/0024044 A1 und XP055824539 nicht statt. Der Hintergrund ein essbares Material zu verwenden, liegt im bevorzugten Anwendungsfall, wenn ein Athlet die Lasche über die Zähne abreisst, und so die abgerissene Lasche auch bedenkenlos mit verzehren könnte. Die asymmetrische Form des Behälters wäre für Hunde unzweckmässiger. Ebenso wäre das flexible, bewegliche Texturverhalten der befüllten Verpackung, welches dem herkömmlichen Anwendungsansatz folgt, für mobile Aufnahme und Verzehr bei Hunden ungeeigneter.

Die Folge heute ist, dass Hunde in den mobilen Schnittstellen ihres Alltags mit einer unzureichend belohnenden, erfrischenden, durststillenden, hydrierenden sowie geschmackvollen und nähr- und mineralstoffreichen mobilen Flüssigkeitszufuhr, im Sinne der Deckung eines Grundbedürfnisses, zurückbleiben.

Die Schnittstellen für eine notwendige Flüssigkeitsaufnahme des Hundes liegen insbesondere in den Tagesabschnitten vor dem Schlafengehen sowie nach dem Aufstehen aufgrund eines nächtlichen Dehydrationsrisikos, und vor (präventiv), während und nach dem morgendlichen, mittäglichen und abendlichen Spaziergang. Weiterhin zu nennen sind Aktivität und Beanspruchung des Bewegungsapparates in Verbindung mit den klimatischen Umfeldbedingungen, Hin- und Rückfahrt beziehungsweise lange Autofahrten sowie Urlaubsreisen oder Tagesausflüge, bei welchen es mitunter zu längeren Fahrtwegen und damit zu erhöhten physischen, dehydrierenden Beanspruchungen für den Organismus des Hundes kommt. Eine Schnittstelle entsteht auch während und nach der Fütterung (abhängig von der Art und Zusammensetzung des etwaigen Hauptfuttermittels und der Häufigkeit der Futtergabe), um die bei der Verdauung verloren gegangene und beanspruchte Flüssigkeitsmenge im Organismus auszugleichen.

Zu beachten ist auch die saisonale Volatilität der Flüssigkeitsaufnahmezyklen, insbesondere an Tagen mit hitzigen klimatischen Umfeldbedingungen ist eine regelmässige, ausreichende sowie orts- und zeitunabhängige Flüssigkeitsaufnahme unabdingbar. Zu denken ist auch an Hunde, die einer durchgehend hohen physischen Belastung ausgesetzt sind und einen durchgehend mobil charakterisierten Tagesablauf besitzen, wie es unter anderem bei beruflich und dienstlich eingesetzten Hunden der Fall ist. Auch krankheitsbedingter Flüssigkeitsentzug, wie beispielsweise bei Durchfallerkrankungen, Fieber, Erbrechen, Nierenerkrankungen oder Diabetes Mellitus sind zu berücksichtigen. Ein regelmässiges Trinken über den Tag hinweg ist nötig, sowohl in stationärer als auch vor allem in mobiler Hinsicht, um den Tagesmindestbedarf der Flüssigkeitsaufnahmemenge, im vollen Wissenseinklang mit dem Hundebesitzer zu erreichen. Eine ganzheitliche Hydration des Hundes wirkt sich nämlich positiv sowohl auf dessen physiologischen als auch energetischen Zustand aus.

Im Rahmen der Bedürfniserkennung, -auseinandersetzung und -lösung wurde bewusst, dass die Menschen die zeit- und ortsunabhängige Deckung der Grundbedürfnisebene der so genannten "Maslow-Pyramide" als automatisierte Selbstverständlichkeit vornehmen und die hieraus hervorgehenden Hundebesitzer, wenn auch unbewusst oder unwissend, dem Hund diese Erfüllungseigenschaft aufgrund fehlender, nachhaltiger Aufklärung beziehungsweise fehlender Gesamtlösungen vorenthalten. Insbesondere fehlt dem Hundebesitzer die Kenntnis bezüglich der täglich tatsächlich aufgenommenen, mobilen und stationären Flüssigkeitsmenge dessen Hundes.

Der vorliegenden Erfindung liegt daher die Aufgabe zu Grunde, eine Lösung zur mobilen Flüssigkeitsversorgung von Hunden bereitzustellen, welche flexibler einsetzbar, einfacher im Handling, besser transportierbar, belohnender, gesamtheitlich auf Hund und Hundebesitzer bedürfnisgeschneidert, aufklärender, integrierbarer und bedarfsgerechter portionierbar bzw. kontrollierbar ist als es bei den bekannten Lösungen der Fall ist.

### Darstellung der Erfindung

Die Aufgabe wird erfindungsgemäss durch ein verzehrbares Sachet für eine mobile Flüssigkeitsversorgung von insbesondere Hunden, gelöst, wie sie im unabhängigen Anspruch 1 definiert ist. Vorteilhafte Ausführungsvarianten der Erfindung ergeben sich aus den abhängigen Ansprüchen.

Das Wesen der Erfindung besteht im Folgenden: Ein Sachet für eine mobile Flüssigkeitsversorgung von insbesondere Hunden. Das Sachet umfasst eine Umhüllung sowie ein von der Umhüllung umschlossenes Kernmedium. Die Umhüllung ist dabei aus einer verzehrbaren Membran gebildet und das Kernmedium ist aus einer gelierten Flüssigkeitssubstanz gebildet.

Der Begriff "gelierte Flüssigkeitssubstanz" umfasst vorliegend das Texturverhalten von nicht fliessfähigen (d.h. ohne temperaturbedingten Eingriff keine rheologischen Eigenschaften im Sinne von Fluidität bzw. Viskosität), (fest) zusammenhaltenden, mitunter schnittfähigen bzw. -festen, sowie mit einem in Abhängigkeit zum eingesetzten Geliermittel individuellen molekularen Netzwerk versehenen (weichen) Gelfestkörper (Hydrokolloid). Die sich im Rahmen des Gelierprozesses aufbauenden Molekülketten besitzen eine hohe Wasser- bzw. Flüssigkeitsbindungsaktivität und lassen beim so genannten Phasenübergang von "Sol (zweiphasiges System zwischen Flüssigkeit und beigefügter Geliermittelform)" zur Gelphase "Fest (einphasiges, kolloidales System ab individuellem Gel-Erstarrungspunkt)" einen wasser- bzw. flüssigkeitshaltigen und dennoch festen, geringfügig bis nicht beweglichen sowie kau- und verzehrfähigen Aggregatszustand entstehen. Die gelierte Flüssigkeitssubstanz weist zudem insbesondere gastrointestinale flüssigkeitsfreisetzende Eigenschaften, sowie gegebenenfalls sich in der Flüssigkeitssubstanz für eine zusätzliche funktionelle Resorption und Absorption befindende Ergänzungsmittel, auf.

Der Begriff "Sachet" bezieht sich vorliegend ausdrücklich auf das gesamte Produkt, d.h. auf die Umhüllung und das Kernmedium.

Der Begriff "verzehrbar" bezieht sich vorliegend darauf, dass insbesondere Hunde das Sachet vollständig fressen bzw. (nicht-)enzymatisch verdauen können, d.h. ohne jedwede gesundheitlichen Beeinträchtigungen. Das Sachet kann grundsätzlich auch für andere Haustier- bzw. (Heim-)Tierarten, wie insbesondere Katzen, eingesetzt werden. Der primäre Einsatz richtet sich aber auf Hunde.

Die verzehrbare Membran enthält mit Vorteil die Funktionscharakteristik wasserunlöslich. Der Begriff "wasserunlöslich" bezieht sich vorliegend insbesondere darauf, dass die Membran sich bei Kontakt mit Wasser bzw. Flüssigkeit bzw. (feuchthaltigen) Gelen nicht auflöst bzw. undicht wird (d.h. zum Beispiel aufgrund von Regeneinwirkung bei Spaziergängen), damit auch der darin liegende, feuchte Kerninhalt ohne Beeinträchtigungen eingeschlossenen werden kann und damit etwa auch eine homogene Angleichung der gelierten Inhaltsmasse an die Innenseite der Membranhülle im thermischen (Nachbehandlungs-)Prozess einer so genannten Nachgelierung, d.h. einer erneuten Verflüssigung (Thermoreversibilität) durch einen auf das Geliermittel individuell angepassten Erhitzungsschritt und anschliessendem wiederholten Erreichen des Gel-Erstarrungspunkts, generiert werden kann.

Gleichzeitig sollte im Übrigen die Membran vorzugsweise auch soweit hitze- bzw. temperaturbeständig, wie etwa koch-, back-, kühl- und gefrierstabil, sein, dass sie sowohl bei hochsommerlich warmen als auch bei winterlich kalten Temperaturen (Anwendungsbelastung in mobiler Schnittstelle), sowie auch bezüglich Prozessbelastungen, intakt bleibt. Darüber hinaus ist es auch wünschenswert, dass die Membran biologisch abbaubar ist (d.h. wie etwa bei einem Biopolymer auf Basis von Polysacchariden oder Proteinen).

Weiterhin umfasst der Begriff "Membran" vorliegend dünne Material- oder Gewebeschichten (wie z.B. auch eine Folie, eine Haut, einen Film oder ein Gel), welche im Verhältnis zu ihrer Dicke eine grosse flächige Ausdehnung aufweisen und welche zwei Räume voneinander abtrennen (d.h. hier den Sachetinnenraum mit dem Kernmedium gegenüber der äusseren atmosphärischen Umgebung). Die Membran umschliesst das Kernmedium auf dichtende Weise, so dass kein wesentlicher Inhaltsverlust auftritt, welches Faktum durch den Aggregatszustand eines eingeschlossenen (weichen) Gelfestkörpers zusätzlich sichergestellt werden kann.

Die gelierte Flüssigkeitssubstanz, auch in geringen Konzentrationssphären in Verbindung stehend mit einer niedrigen Wasserbinde- und Wasserhaltekraft bzw. Gelstärke, wird von der Membran mit Vorteil plastisch straff und stabil zusammenhaltend umschlossen und in eine homogene, gleichbleibende und für den Hund bissfeste, und für die entsprechende Kaubelastung in bruchmechanisch geeignete Form gebracht.

Vorzugsweise umfasst die verzehrbare Membran ein Polymer, besonders bevorzugt ein Alginat. Grundsätzlich kommen aber auch alle weiteren verzehrbaren Membranstoffe in Frage, welche auf pflanzlicher (z.B. Biopolymer (Polysaccharide oder Proteine) im Sinne von bspw. pflanzlichen Kunstdärmen), tierischer (z.B. tierische Proteine oder Polysacharide oder Naturdärme), synthetischer oder anderweitiger lebensmittelbezogener verzehrfähiger und zugelassener Ursprungs- und Rohstoffquellen, mitunter aufbauend auf Geliermitteln, einzeln eingesetzten oder synergetischen Stoffgefügen von Stabilisatoren (z.B. Geliermittel-Geliermittel, Geliermittel-Bindemittel/-Verdickungsmittel/-Stärke, gegebenenfalls auch in Verbindung mit stabilisierenden Zusatzstoffen), basieren. Die Membran kann auch mittels entsprechender Folien, Filme, Gele oder Häute gebildet sein.

Durch die auf verzehrbare, gelierte Flüssigkeiten verhältnisbezogen gleichbleibend straffe, robuste und stabile Texturbeschaffenheit der in der Ursprungscharakteristik elastischen Polymer- bzw. Alginatmembran, wird dem Hund ein bissfestes, für den Einsatzzweck der mobilen Flüssigkeitsversorgung optimal angepasstes Medium hinsichtlich der Aufnahme-, Kontroll-, Kau- und Verzehrfähigkeit ermöglicht. Zudem gewährleistet die Membran eine, in Abhängigkeit zur Beeinträchtigungshöhe der Diffusionsoffenheitsausprägung, zeitlich begrenzte Schutzfunktion, hinsichtlich einer möglichen Austrocknung der abgefüllten Inhaltsmasse bzw. der im Gelnetzwerk gebundenen Flüssigkeit, welcher Aspekt durch das Einschliessen eines Hydrokolloids, mit besonderer Fokussierung der eines hitzestabilen Stabilisators wie bspw. das Biopolymer Agar-Agar in Form von einer hohen Temperaturrampe des Gelschmelzpunkts ab/über etwa 85 °C, besonders effektiv erfüllt wird.

Alginatbasierte Membranen etwa besitzen die Eigenschaft der Diffusionsoffenheit, d.h. würde Sauerstoff und anderweitige beeinflussende Umweltfaktoren auf die Membran einwirken, hätte dies auch eine unmittelbare Auswirkung auf den darin eingeschlossenen Inhalt sowie das generelle Texturverhalten. Es würde gegebenenfalls als Folge zu einer Membranschlaffheit sowie einer Reduzierung der Inhaltssubstanz kommen. Dieser Aspekt ist vor allem dann gegeben, wenn sich der Inhalt im flüssigen bzw. fliessfähigen und dadurch in einem über die (Alginat-)Hülle nach aussen diffundierfähigen Aggregatszustand befindet. Infolgedessen, dass vorliegend eine Umhüllung bzw. Einkapselung einer gelierten Flüssigkeit als Kernmedium gewählt wird, bleibt die Membran trotz ihrer Diffusionsoffenheit aufgrund der physikalischen Stabilität des Kernmediums bei aktiver Sauerstoff- und Temperatureinwirkung (z.B. ausserhalb der Umverpackung) relativ straff und es kommt lediglich zu einer geringfügigeren Reduzierung des Inhalts, als wenn dieser flüssig bzw. viskos, im Hinblick auf eine eingeschränkte Wasser- bzw. Flüssigkeitseinlagerung im molekularen Netzwerk, wäre (d.h. aufgrund der physikalischen Stabilität des Kernmediums). Auch ist der Aggregatszustand "geliert" für eine mit dem Herstellungsprozess in Verbindung stehende thermische Nachbehandlung zur Generierung einer mikrobiologischen und physikalisch-chemischen sowie sensorischen Produktstabilität angesichts der (hohen) Temperaturbarriere zur Erreichung der Thermoreversibilität im Sinne von einer stetigen Verflüssigung, wie etwa insbesondere bei Agar-Agar, ein zentraler Prozessparameter, ohne wie im Falle von fluiden bis viskosen Flüssigkeiten, ohne einen wesentlichen Mengenverlust und auch ohne haltbarkeitsbindende pH-Wert-Senkung, ein Differenzierungsfaktor. Ferner könnte bei Einschluss von fluider bis viskoser Flüssigkeitssubstanzen, die in der Grundtextur der meisten Membranformen vorherrschende Elastizität, nicht in eine bissfeste Korpusausfüllung des "Sachets" umgewandelt werden, und würde demzufolge durch den Hund als zu schlaff, elastisch und beweglich wahrgenommen werden.

Durch das gelierte Kernmedium und die dadurch unter anderem bezweckte Robustheit und Widerstandsfähigkeit, wird das erfindungsgemässe Sachet angesichts seiner physikalischen Stabilität im Hinblick auf die maschinen- bzw. herstellungs-, haltbarmachs- sowie logistisch- und anwendungsbedingten Verfahrensschritte prozessstabil.

Die Membran hält die abgefüllte, vorzugsweise weich-spröde, gelierte Flüssigkeitssubstanz mit einem hohen Anteil an gebundener Flüssigkeit (Hydrokolloid) zusammen und impliziert dahingehend einen massgeblichen Beitrag zum Texturergebnis der Sachets. Diese ermöglicht dadurch dem Hundebesitzer eine einwandfreie, mitunter hygienische, aufgrund der bevorzugt feucht-gelierten Oberflächenbeschichtung des Hydrokolloids, Gabe des Sachets, ohne dass es zu einem vorherigen Zerfall des Kernmediums in einzelne Gelbruchstücke kommt. Die Membran ermöglicht dem Hund auch eine optimale präorale Aufnahme der Sachets, ohne dass es zu einem Verlust der Inhaltsmenge aufgrund des scharf-spitzen Zahngefüges (d.h. insbesondere durch die Schneidezähne) kommt.

Schliesslich ermöglicht die Membran ein vordosiertes (präzise Volumendosierung) und durch den Hund kontrollierbares Volumen an zuzuführender gelierter Flüssigkeitssubstanz. Die Membranhülle ist in ihrer Textur angesichts der Oberflächenbeschaffenheit bevorzugt so ausgestaltet, dass es zu einem reibungsniedrigen Verzehr und Schluckprozess durch den Hund kommen kann.

Im Falle einer Alginatmembran wird im Zuge des Membranaufbaus dem Alginat ein Stoffagonist in Form von Calciumchlorid oder Calciumlactat (Alginat geliert mit Calcium-lonen zu Membrannetzen (Verkapselung)) als Vernetzungslösung beigefügt. Hierdurch kann eine besonders effektive Form der Vernetzung erzielt werden.

Vorzugsweise basiert die Alginatmembran auf einer mit dem maschinellen Anwendungsverfahren in abhängiger Verbindung stehenden Alginatpaste, welche einen bestimmten Anteil an Natriumalginat in der Produktzusammensetzung enthält. Natriumalginat bezeichnet das Natriumsalz der Alginsäure und wird aus der Ressource der Braunalge (einer Form von Meeresalge) gewonnen. Eine derartige Alginatpaste vereint zudem einen überwiegend hohen Anteil an gebundenem Wasser, welcher, im Verhältnis zur prozentualen Anteilsmenge des Hüllenerzeugnisses eines etwaigen Sachetvolumens, zu einem gewissen Mass durch den Hundeorganismus, d.h. zusätzlich zum gelierten Flüssigkeitskern, gastrointestinal freigesetzt sowie sodann resorbiert und absorbiert werden kann.

Natriumalginat wird allgemein den fermentierbaren, pflanzlichen Faserstoffen (Ballaststoffen) zugeordnet und weist insbesondere keine nachteiligen gesundheitsbezogenen Auswirkungen bei Hunden auf. Das Alginat als Ausgangsprodukt kann grundsätzlich auch in einem anderen Aggregatzustand als pastös vorliegen. Die Verwendung von alternativen Membranstoffen mit vergleichbaren Eigenschaften ist denkbar.

Vorzugsweise weist die verzehrbare Membran eine Dicke von etwa 0.05 mm bis etwa 5 mm, vorzugsweise von etwa 0.1 mm bis etwa 2 mm, weiter vorzugsweise von etwa 0.15 mm bis etwa 1.5 mm und noch bevorzugter von etwa 0.2 mm bis etwa 1 mm auf. Kleinere Dicken als 0.05 mm können ggf. zu einem ungewollten Platzen oder Reissen der Membran führen und grössere Dicken als 5 mm werden von Hunden weniger gerne angenommen. Die Membran kann eine ein-, zwei- oder multischichtige Umhüllung sein.

Vorzugsweise umfasst die gelierte Flüssigkeitssubstanz Suppen, Brühen oder Smoothies sowie weitere Inhaltsvarianten von im ursprünglichen Aggregatszustand flüssigen bis viskosen funktionellen Lebensmitteln (Functional Foods) auf tierischer oder pflanzlicher bzw. vegetarischer oder veganer Basis, oder Trinkwasser, oder der Flüssigkeitssubstanz beigefügten Ergänzungsmittel. Ergänzungsmittel bezeichnen vorliegend solche Zusatzprodukte oder Rohstoffe, unabhängig von ihrer Beschaffenheitsform, welche im Zusammenspiel mit Wasser oder Flüssigkeit die Flüssigkeitsaufnahme von insbesondere Hunden zum Gegenstand haben. Hierbei sind auch mit umfasst Ergänzungsmittel, welche eine naturheilkundenbasierte bzw. homöopathische, vitalisierende bzw. nährstoffreiche, trinkaufnahmefördernde, gesundheits-, hygiene- oder pflegefördernde Wirkung für Hunde haben und im Zusammenhang mit der im Gel einliegenden Flüssigkeit gastrointestinal freigesetzt und für eine ernährungsphysiologische bzw. zweckgerichtete Verwertung (Dissolution) zur Verfügung stehen. Auch Hydrogele im Sinne von einem Wasser-Kohlenhydrat-Polymerverbund als Energielieferanten, sowie Öle, Joghurtgetränke, Shakes, Säfte, Tees oder alternativen Flüssigkeitsformen mit vergleichbaren Eigenschaften sind gleichermassen einsetzbar. Es werden demgemäss sowohl zweiphasige Komponenten im Sinne von Flüssigkeit und Geliermittel als auch dreiphasige Komponenten im Sinne von Flüssigkeit plus Funktionsstoff (bspw. homöopathischer Natur) und Geliermittel zentralisiert.

Vorzugsweise ist die gelierte Flüssigkeitssubstanz mittels von Geliermitteln wie insbesondere Agar-Agar, Gelatine, Alginat(e), Alginsäure, Carrageen, Pektin oder Traganth geliert. Grundsätzlich können auch alle anderen, auf den Hund zugelassenen Geliermittel (bzw. auf Futter- und Futterergänzungsmittel zugelassene Geliermittel), eingesetzt werden. Denkbar ist im Hinblick auf die Verwendung von insbesondere synergetischen Stoffverhältnissen (d.h. Geliermittel (Basis) in Komposition mit Binde- und/oder Verdickungsmittel, Stärke, Emulgatoren, sowie Geliermittel, welche ebenso als Binde- und Verdickungsmittel verwendet werden können (Zusatz)), auch der Einsatz von Stärke, Binde- und/oder Verdickungsmittel wie etwa Johannisbrotkernmehl, Guarkernmehl, Pfeilwurzelmehl, Flohsamenschalen, Maisstärke, Kartoffelstärke, Xanthan, Gummi Arabicum, Tarakernmehl, Gellan, Cellulose oder Caseine, sowie von allen weiteren auf den Hund zugelassen (bzw. auf Futter- und Futterergänzungsmittel zugelassene) Stärken, Binde- und Verdickungsmitteln und Emulgatoren.

Dabei kann es sich sowohl um Einzelstoffe der Geliermittelgruppen als auch um synergetische Stoffe in Form eines Stoffgefüges aus Geliermittel-Geliermittel oder Geliermittel-Verdickungsmittel/-Bindemittel/-Stärke handeln, welche auf pflanzlicher, tierischer oder synthetischer oder anderweitiger lebensmittelbezogener verzehrfähiger und zugelassener Ursprungs- und Rohstoffquellen basieren. Im Hinblick auf die Ausgestaltung des erfindungsgemässen Sachets für die mobile Flüssigkeitsversorgung von Hunden wird vorliegend der pflanzliche Faserstoff (Ballaststoff) Agar-Agar als das Hydrokolloid bzw. den (weichen) Gelfestkörper stabilisierenden Geliermittel besonders bevorzugt.

Agar-Agar wird aus den äusseren Zellwänden der Rotalge gewonnen und definiert einen fermentierbaren, pflanzlichen Faserstoff (Ballaststoff) aus der Kolloidgruppe der biologisch abbaubaren Polysaccharide (Biopolymer), welcher durch den Hundeorganismus (weitgehend) nicht enzymatisch verdaut und verstoffwechselt werden kann. Aufgrund der Ballaststoffeigenschaft dringt der Faserstoff nicht direkt in den Stoffwechsel- und Verdauungskreislauf des Hundeorganismus ein und lässt somit die (mobile) Flüssigkeitsaufnahme und -versorgung im Zentrum der positionierten Produktfunktion bestehen. Agar-Agar weist im Gegensatz zu anderen pflanzlichen Hydrokolloid bildenden Geliermitteln, keine enzymatischen bzw. chemischen (Magensaft; Verdauungsenzyme) Verdauungseffekte für eine gastrointestinale Freisetzung der in den Gelfestkörpern gebundenen Flüssigkeit auf. Dies ist vor allem auf die pH-Wert-Unempfindlichkeit sowie Säureresistenz von Agargelen zurückzuführen. Vor diesem Hintergrund basiert die Freisetzungseffektivität auf einer geringkonzentrierten Agareinwaage (Gew.-%, d.h. bezogen auf "gelierte Flüssigkeitssubstanz (Kernmedium)" unabhängig von Membran) des in der Membran festgehaltenen und -geformten Agargels, verbunden mit dem oralen Prozessieren bzw. der oralen Kaumechanik des Hundes (Gelaufbruch), sowie insbesondere der im Magen-Darm-Trakt entgegenwirkenden mechanischen Verdauungs- bzw. Scherkräften in Form der Peristaltik, um die im Netzwerk (leicht) gebundene Flüssigkeit unter weiterem kontinuierlichem Gelaufbruch, ohne wiederkehrendem wasserbindendem Aufquellen in der Darmpassage, freilegen zu können. Agarosegele besitzen die Funktionseigenschaft der Wasser- bzw. Flüssigkeitsaustrittsfähigkeit unter mechanischer Beanspruchung wie etwa die der Peristaltik des Verdauungsapparates. Des Weiteren können auch differente Verdauungs- und Flüssigkeitsfreisetzungsmechanismen auf Grundlage anders verhaltender Geliermittel, wie bspw. Gelatine (Schmelzen der Gelatine-Gelbruchstücke im Maulraum; enzymatische Verdauung und Abbau von Gelatineketten) oder Pektin (chemische jedoch nicht enzymatische Verdauung im Sinne von pH-Wertempfindlichem Netzwerkabbau im Magen, mit anschliessender erneuter Quellfähigkeit und Wasserbindeaktivität im Darmtrakt), vorstellbar sein.

Der Faserstoff besitzt die Funktionseigenschaft einer hohen Temperaturrampe betreffend der Thermoreversibilität des gelierten Kernmediums, d.h. dem Aufschmelzen und Verflüssigen, erst ab einem Temperaturbereich von über etwa 85 °C. Hierzu gegenübergestellt tritt der Gel-Erstarrungspunkt ab unter etwa 40 °C ein. Es wird hierdurch eine optimale Ausgangslage für das Kriterium des Erhaltens einer physikalischen (Langzeit-)Stabilität sichergestellt.

Zudem können aus Agar-Agar generierte Kernmedien in allen alltagsbezogenen Temperaturzonen angewendet werden, was vor allem einen agilflexiblen Einsatz, mit gleichbleibendem Texturverhalten der Sachets in den genannten mobilen Schnittstellen unter Einbezug der (klimatischen) Umfeldbedingungen gewährleistet.

Die Gelfestigkeit und -stärke im Sinne der Ausprägungshöhe der Verschraubungen der Helices zu Aggregaten (Netzwerk) unter Verwendung von Agar-Agar hängt insbesondere auch von der Konzentration, der Erhitzungstemperatur und - zeit und dem pH-Wert der beigegebenen, zu in einen Gelfestkörper zu verwandelnde Flüssigkeitssubstanz ab. Deshalb muss die Konzentration von Agar-Agar an die jeweils vorliegende Flüssigkeitssubstanz in Abhängigkeit zu deren pH-Wert-Eigenschaft angepasst werden, da mit abnehmenden pH-Wert das Risiko eines langfristigen physikalischen Zerfalls des Hydrokolloids auftreten kann. Bevorzugte Konzentrationsbereiche (Agareinwaage; Gew.-%) für beispielsweise Agar-Agar liegen für die angegebenen Flüssigkeitssubstanzen zwischen 0.4 Gew.-% und 1.5 Gew.-%, vorzugsweise zwischen 0.6 Gew.-% und 1.2 Gew.-% und besonders bevorzugt bei etwa 0.7 Gew.-% bis 1.1 Gew.-%. Die Gel-Konzentration ist für jedes andere zum Einsatz gebrachte Geliermittel, unter Bezugnahme der dem Geliermittel zugehörigen Kennzahl, individuell einzustellen.

Agar-Agar geht wie auch die Alginathülle auf die Grundressource der Meeresalgen (äussere Zellwände der Rotalge) zurück und stellt einen Verschnitt aus zwei löslichen Ballaststoffen, nämlich den Polysacchariden Agarose (zu 70 %; massgeblich für Gelierprozess) und Agaropektin (zu 30 %), dar. Aufgrund einer Agar-Agar als fermentierbaren Faserstoff zugesprochenen präbiotischen Wirkungsfunktion, werden negative Darmbakterien effektiv reduziert und dadurch die Darmgesundheit des Hundes gefördert.

Gleichzeitig ist das Faktum gegeben, dass die im Kernmedium durch Agar-Agar gebundene Flüssigkeit, z.B. eine nähr- und mineralstoffreiche Knochenbrühe, nach verzehrtem Transfer in den Verdauungsapparat (Gastrointestinaltrakt), in überwiegender physikalischer Verdauungskorrelation mit dem oralen Prozessieren bzw. der oralen Kaumechanik des Hundes (erster Gelaufbruch), sowie insbesondere der im Magen-Darm-Trakt entgegenwirkenden mechanischen Verdauungs- bzw. Scherkräften in Form der Peristaltik um die im Gel-Netzwerk (leicht) gebundene Flüssigkeit unter weiterem kontinuierlichem Gelaufbruch, ohne wiederkehrendem wasserbindendem Aufquellen in der Darmpassage, freilegen zu können. Auch können die darin gegebenenfalls enthaltenen Nährstoffe, Mineralstoffe und Spurenelemente (der Knochenbrühe) oder in der Flüssigkeit mit eingeschlossenen Ergänzungsmittel resorbiert und absorbiert werden. Agar-Agar wurde sowohl von der Association of American Feed Control Officials (AAFCO) sowie auch von der Europäischen Behörde für Lebensmittelsicherheit (EFSA), ohne Höchstbegrenzung (ADI-Wert, d.h. Acceptable Daily Intake) für Lebens- und Futtermittel zugelassen und gilt als sicher für Tierfuttermittel. Ebenso kann die Erscheinung einer abführenden Verdauungsreaktion angesichts einer potenziell zu hohen Dosierung von Agar-Agar dem Sachet in Bezug auf die geringfügig implementierte Agareinwaage abgesprochen werden.

Es ist darüber hinaus im Rahmen der vorliegenden Erfindung auch der Einsatz von bereits (handels-)fertig gelierten Produkten/Substanzen denkbar sowie von Produkten/Substanzen, welche mitunter die sekundäre Eigenschaft einer flüssigkeitsspendenden Charakteristik aufweisen.

Damit die zentralen Anforderungskriterien und intendierten funktions-, textur- und beschaffenheitsbedingten Eigenschaften des erfindungsgemässen Sachets im Zusammenhang mit dem fokussierten Einsatzbereich bei Hund und Hundebesitzer qualitativ erzielt und nachhaltig sichergestellt werden können, wurde das Einschliessen einer gelierten Flüssigkeitssubstanz, beziehungsweise eines gelierten flüssigkeitsähnlichen Produktes, als die auf die Anwender- und Verbrauchergruppe am effektivsten angepasste Ausgestaltungsform gewählt.

Ein Anforderungskriterium ist dabei die Dichtigkeit des Sachets hinsichtlich einer leckagefreien Geschlossenheit der Membranhülle, so dass es zu keinem Austritt des gelierten Flüssigkeitsproduktes bzw. des Kernmediums, vor allem bei Kraftausübung durch den Aufnahmeprozess des Hundes und dem Produkthandling durch den Hundebesitzer, kommen kann. Dies wird durch das Einschliessen der gelierten Flüssigkeitssubstanz vor dem Hintergrund ihrer homogenen, nicht fliessfähigen Gel- bzw. Hydrokolloid-Textur und -beständigkeit sowie der plastisch zusammenhaltenden und schnitt- bzw. bissfesten Textureigenschaft der Gesamtkomposition des Sachets gewährleistet.

Bei der Verwendung vollkommen flüssiger bis viskos-gebundener (Flüssigkeits-)Substanzen würde sich die Generierung eines ausgefüllten, stabilen, membranstraffen und bissfesten Sachets nicht ergeben. Es würde somit unter anderem zu einer Abnahme bis hin zu einer Resistenz der Aufnahmeakzeptanz und -präferenz eines Hundes kommen. Zudem wäre durch das spitz-scharfe Zahngefüge des Hundes, welches dieser für die Aufnahme und den Verzehr zur Anwendung bringt, die Gefahr des Auslaufens und Verlusts der Flüssigkeit, bei einem beispielhaften Membranriss, sehr gross. Das Abfüllen eines (weichen) Gelfestkörpers im Sinne einer gelierten Flüssigkeitssubstanz bezweckt ein räumlich dicht und straff ausgefülltes Sachet und ermöglicht somit eine gleichartig geschlossene sowie geformte Sachetausgestaltung. Durch die Bereitstellung einer physikalischen Stabilität des Sachets kann zudem einem potenziell bestehenden Effekt einer Membranelastizität und Diffusionsoffenheit, und dadurch der Gefahr einer Membranschlaffheit und Austrocknung der Inhaltssubstanz positiv entgegengewirkt werden. Dies würde nämlich auch eine direkte Beeinträchtigung des präoralen und oralen Aufnahme-, Kontroll-, Kau- und Verzehrprozesses mit sich bringen.

Ein plastisch robustes Sachet, welches durch das Abfüllen von einer gelierten Flüssigkeitssubstanz erreicht wird, offeriert eine Widerstandsfähigkeit und für den spezifischen Anwendungsablauf eine Sachetstabilität im Produkthandling (Transport) und in der Produktgabe durch den Hundebesitzer. Darüber hinaus haben gelierte Flüssigkeitssubstanzen eine kühlende Eigenschaft und zudem den Vorteil, dass diese sich, vor allem an hitzigen Sommertagen, als überaus erfrischend im Maulraum (Erfrischungseffekt, welcher auch für die psychologische Wahrnehmung einer Durstillung mittragend ist) anfühlen und unter einer hohen Flüssigkeitsassoziation wahrgenommen werden können. Der Hund führt das Sachet über die Schneide- und Fangzähne in dessen Maulhöhle und öffnet bzw. aktiviert den erfrischenden, feuchthaltigen Gelaustritt per kontrolliertem Biss über die Prämolaren.

Aufgrund der durch die gelierte Flüssigkeitssubstanz bezweckten plastischen Ausfüllung des Sachets ergibt sich ein effektiver, auf den Hund angepasster Aufnahme-, Kontroll-, Kau- und Verzehrprozess. Die dabei bezweckte Bissfestigkeit, hinsichtlich des durch orales Prozessieren entstehenden Aufbrechens der Membranhülle im Maulraum, generiert sich aus der Komposition aus Membran- beziehungsweise Alginathülle und einer nach dem Biss heraustretenden spröden, weichkaufähigen und dennoch vorzugsweise leicht schnittfesten Substanz. Auf diese Weise kann erstmalig eine für den Hund verzehrbare Flüssigkeitsaufnahme geschaffen werden. Die texturbezogene, sehr unterschiedliche Sensorik des Sachets weckt ein für den Hund ganzheitlich neuartiges Aufnahme- und Verzehrgefühl bestehend aus Bissfestigkeit und dennoch vorhandener Weichheit sowie gelartiger Feuchtigkeit im Zuge eines angenehmen Aufplatzeffekts.

Durch den Einsatz einer gelierten Flüssigkeitssubstanz wird überdies eine intendierte Sachetrobustheit geschaffen, so dass selbst wenn das Sachet bei der Gabe durch den Hundebesitzer im Übergang zum Aufnahmeverhalten des Hundes unbeabsichtigt auf den Boden fallen sollte, dieses nicht unmittelbar zerplatzen, reissen oder deformieren kann. Selbst im Falle einer Rissbildung in der Membranhülle, wird die darin liegende Inhaltsmasse (Hydrokolloid), wie oben bereits beschrieben, im gelierten Aggregatszustand in Form gehalten und es wird anders als bei fluider bis viskoser Flüssigkeit, kein Verlust des Kernmediums stattfinden.

Da es im Rahmen des Aufnahmeprozesses des Hundes, zurückzuführend auf dessen natürlichen Verhaltensmuster, häufig zu einer Aufnahme von Futterbestandteilen oder verzehrbaren Belohnungsinstrumenten über den Boden kommt, kann dieses problemlos durch das erfindungsgemässe Sachet abgedeckt werden. Selbst wenn der Hund das Sachet aufbeissen und in mehreren Zyklen aufnehmen sollte, wird dies durch den gelierten Inhaltskern präventiv gelöst, da das Bruchverhalten des Kernmediums anhand der Konzentration des Geliermittels so ausgestaltet ist, dass dieses innerhalb des ersten mechanischen Kontakts wie dem des oralen Kauens, nicht unmittelbar in einzelne, zu kleine und/oder zu viele Gelbruchstücke zerfällt.

Des Weiteren ist ein Verschlucken, wie dies regelmässig im Rahmen der stationären Flüssigkeitsaufnahme sowie bei den heutigen Produktlösungen der mobilen Flüssigkeitsversorgung von Hunden vorkommt, durch die Ausgestaltungsform im Sinne der Umhüllung einer gelierten Flüssigkeitssubstanz mittels der reibungsniedrigen Membran beziehungsweise Alginathülle ausgeschlossen. Der Grund für das Verschlucken bei der stationären Flüssigkeitsaufnahme liegt in einer falschen Kanalisierung der durch den Hund (bei akutem Durstbedarf) sehr schnell aufgenommenen Flüssigkeit in die Luftröhre.

Aufgrund der mit den Textureigenschaften bezweckten Ausgestaltungskomposition des Sachets und der damit einhergehenden Stabilität und Bissfestigkeit, assoziiert der Hund mehrheitlich ein ihm gewohntes Aufnahmegefühl, wie im Fall eines konventionellen "Leckerli bzw. Belohnungssnacks" und nimmt das Sachet deshalb primär als belohnendes Instrument (Stimuluseffektivität) betreffend der verzehrbaren Flüssigkeit auf. Damit wird selbst für einen "trinkfaulen" Hund die mobile Flüssigkeitsaufnahme revolutioniert, da es zu einer Verbindung von Kau- bzw. Verzehrprozess und einer dennoch durch gastrointestinale Freisetzung (Resorption) und Beanspruchung (Absorption) bezweckten Flüssigkeitsversorgung (Hydration) kommt. Letztlich findet der Differenzierungsfaktor zu den gegenwärtig marktbekannten, konventionellen und oftmals fett- und kalorienreichen Belohnungssnacks vor allem im Hinblick auf die Grundbedürfniserfüllung der mit dem belohnenden Verzehr mitgeförderten mobilen Flüssigkeitsversorgung von Hunden, statt.

Das Einschliessen eines Kernmediums im Sinne eines nicht fliessfähigen, zusammenhaltenden, mitunter schnittfähigen bzw. -festen, sowie mit einem in Abhängigkeit zum eingesetzten Geliermittel individuellen molekularen Netzwerk versehenen (weichen) Gelfestkörpers (Hydrokolloid) in die Membran (vorzugsweise eine Alginatmembran) bezeichnet die Ausgestaltungsform, welche die Bedürfnistiefe eines Mediums einer mobilen Flüssigkeitsversorgung für vorrangig den Hund aber auch den Hundebesitzer in optimaler Weise abdecken und bedienen kann.

Vorzugsweise umfasst das Volumen des Sachets einen Bereich von etwa 2 cm³ bis etwa 35 cm³, vorzugsweise von etwa 2.5 cm³ bis etwa 30 cm³, weiter vorzugsweise von etwa 2.8 cm³ bis etwa 25 cm³, weiter vorzugsweise von etwa 3 cm³ bis etwa 20 cm³ und noch bevorzugter von etwa 5 cm³ bis etwa 15 cm³

Bevorzugt weist das Sachet dabei eine wurstartige, beutelartige, ovalartige, oder ellipsenartige Form auf, so dass es von einem Hund besonders gut aufgenommen werden kann. Es sind jedoch auch kugelartige, würfelartige oder dreieckartige Formen und ähnliches vorstellbar.

Die formbezogene Ausgestaltung hängt primär vom Aufnahme-, Kontroll-, Kau- und Verzehrprozess in Verbindung mit dem anatomischen Gebissaufbau und Zahngefüge eines Hundes ab, was nachfolgend kurz erläutert werden soll.

Die Eck- beziehungsweise Fangzähne eines Hundes gestalten sich als lang und spitz. Sie befinden sich hinter den Schneidezähnen an der Vorderseite des Hundemauls. Mit diesen greifen und halten die Hunde die jeweils vorliegende sowie zugeführte Nahrung und verriegeln den Gegenstand fest im Maul. Zwischen den Eckbeziehungsweise Fangzähnen sitzen die Schneidezähne, welche deutlich kleiner sind. Mit den Schneidezähnen nimmt der Hund kleinere, kontrollierbarere Nahrungsstücke auf.

Die Backenzähne, welche als Prämolaren bezeichnet werden, bringt der Hund zum Einsatz, um sehr harte Nahrung zu kauen und entsprechend zu zerkleinern bzw. aufzubrechen. Die Prämolaren sind ebenfalls sehr spitz und zudem mit einem harten Zahnschmelz überzogen. Sie befinden sich im hinteren Bereich des Kiefers.

Aufgrund der plastisch, fest gelierten, stabil ausgefüllten und zusammenhaltenden, insbesondere wurstartigen, beutelartigen, ovalartigen, oder ellipsenartigen Formgebung des Sachets bekommt der Hund im Vergleich zu anderweitigen, geometrischen Formen wie beispielsweise der Kugelform eine - in Relation betrachtet - grosse Grifffläche für die Aufnahme durch die Schneide- und Fangzähne zur Verfügung gestellt und kann diese mitunter ggf. auf Basis einer im Herstellungsprozess eingearbeiteten langen, flachen Fläche der Unterseite des Sachets optimal im Maulraum zu den Prämolaren weiterreichen und für den Verzehrprozess portionieren.

Eine derartige Formgebung in Kombination mit der gleichbleibend stabilen sowie bissfesten Ausgestaltung lässt den Hund das Sachet auch während eines dynamischen Gehvorgangs kontrolliert aufnehmen (feste Verriegelung durch Fangzähne), kauen und verzehren. Zudem ist eine derartige Formgebung der generell meist länglich flachen Maulform eines Hundes angeglichen und kommt somit dem Kontroll- und Verzehrmechanismus stärker entgegen.

Aber auch für den Hundebesitzer als Geber ist eine wurstartige, beutelartige, ovalartige oder ellipsenartige Formgebung des Sachets effektiver im Sinne der Passform in der Hand zu handhaben und dem Hund zu verabreichen. Durch die Sicherstellung von für den Hund gewohnten Aufnahme-, Kontroll-, Kau- und Verzehrprozessphasen, wird zudem der Aspekt vorangetrieben, dass dieser das Sachet tatsächlich zum Verzehr vorportioniert und es dadurch zu keiner Verschluckungsgefahr des Sachets im Ganzen kommen kann. Dieser Fakt könnte beispielsweise durch eine Kugelform, aufgrund der schwierigen Aufnahme- und Kontrollfähigkeit im Maul, sowie einer deutlich geringeren Griff- und Kaufläche, nicht unbedingt im selben Mass gewährleistet werden. Die intendierte Formgebung lässt zudem eine hohe Assoziation von Hundebesitzer und Hund hinsichtlich eines Belohnungsinstrumentes zu.

Im Folgenden werden weitere, texturrelevante Parameter des erfindungsgemässen Sachets behandelt.

Vorzugsweise liegt eine maximale Kraft zum Durchschneiden des Sachets, welches etwa aus den vorgenannten Substanzen gebildet wird, in einem Bereich von etwa 5 N bis etwa 25 N, vorzugsweise von etwa 6 N bis etwa 15 N und weiter vorzugsweise in einem Bereich von etwa 7 bis etwa 10 N und/oder in einem Bereich von etwa 1 N bis etwa 24 N, vorzugsweise von etwa 2 N bis etwa 20 N, weiter vorzugsweise von etwa 3 N bis etwa 15 N und noch weiter vorzugsweise in einem Bereich von etwa 4 N bis etwa 9 N. Die Messung dieses Festigkeitsparameters erfolgte durch Querscherung mehrerer Proben mit einer Werner Brazler Schere, wobei die maximal benötigte Kraft zum Durchschneiden der Proben gemessen wurde. Hieraus wird der Umstand ersichtlich, dass die Sachets eine gewollt geringere Bissfestigkeit aufweisen als beispielsweise ein Wiener Würstchen, bei dem die entsprechende maximale Kraft bei etwa 38 N liegt. Das Wiener Würstchen wird vorliegend lediglich zu Vergleichszwecken hinsichtlich der mechanischen Texturanalyse einbezogenen, um daran die Eigenschaften des erfindungsgemässen Sachets darstellen zu können. Die Probentemperatur betrug hier jeweils + 11 °C.

Vorzugsweise liegt darüber hinaus eine gesamte Kraft zum Durchschneiden des Sachets, welches beispielsweise aus den vorgenannten Substanzen gebildet wird, in einem Bereich von etwa 0.05 J bis etwa 0.25 J, vorzugsweise von etwa 0.1 J bis etwa 0.2 J und weiter vorzugsweise in einem Bereich von etwa 0.125 J bis etwa 0.15 J und/oder in einem Bereich von 0.01 J bis 0.22 J. Die Messung dieser Festigkeit erfolgte durch Querscherung mehrerer Proben mit wiederum einer Werner Brazler Schere, wobei die gesamte zur Scherung benötigte Kraft gemessen wurde. Hieraus ergibt sich, dass derartige Sachets eine deutlich, gewollt, geringere Gesamtfestigkeit bzw. einen deutlich verringerten Kau-Aufwand mit sich bringen als vergleichsweise ein Wiener Würstchen, bei dem die entsprechende gesamte Kraft bei etwa 0.3 J liegt.

Vorzugsweise liegt weiterhin die Spitzenkraft für ein erstes Komprimieren des Sachets, welches beispielsweise aus den vorgenannten Substanzen gebildet wird, um 50 % seiner Höhe in einem Bereich von etwa 3 N bis etwa 25 N, vorzugsweise von etwa 5 N bis etwa 15 N, weiter vorzugsweise von etwa 9 N bis etwa 12 N, noch weiter vorzugsweise von etwa 10 N bis etwa 11 N; und bevorzugt liegt die Spitzenkraft für ein zweites Komprimieren des Sachets um 50 % seiner Höhe in einem Bereich von etwa 0.05 N bis etwa 6 N, vorzugsweise von etwa 1 N bis etwa 5 N, weiter vorzugsweise von etwa 2 N bis etwa 4 N und noch weiter vorzugsweise von etwa 3.0 N bis etwa 3.3 N. Bei dieser Textur-Profil-Analyse (TPA) mit einem Instron 3365 Texturmessgerät (Fa. Instron Corp. Ltd, USA) wurden mehrere Proben in 1 cm hohe Zylinder geschnitten und diese auf eine Platte gestellt. Anschliessend fährt von oben ein Stempel mit einer Druckplatte, die grösser ist als der Probenzylinder, auf die Probe und drückt die Probe um 50% ihrer Höhe (5 mm) ein. Dann fährt der Stempel um 5 mm zurück und drückt danach ein zweites Mal die Probe um 5 mm ein, bevor er wieder in die Ausgangsstellung zurückfährt. Auf diese Weise lässt sich die Elastizität für derartige Proben besonders effektiv bestimmen. Hieraus ergibt sich, dass die Kraft, welche benötigt wird, um die Sachet-Probe ein zweites Mal zu zerdrücken, signifikant kleiner ist als bei der ersten Messung. Wiederum lediglich als Vergleich dazu beträgt bei einem Wiener Würstchen die Kraft, welche benötigt wird, um die Probe ein zweites Mal zu zerdrücken, immer noch über 80 % der Kraft von der ersten Messung; bei den Sachets dagegen im Mittel um die 33 %.

Vorzugsweise beträgt die Kohäsivität des Sachets, welches beispielsweise aus den vorgenannten Substanzen gebildet wird, von etwa 0.01 bis etwa 0.4, vorzugsweise von etwa 0.03 bis etwa 0.3, vorzugsweise von etwa 0.05 bis etwa 0.2 und weiter vorzugsweise von etwa 0.06 bis etwa 0.10. Die Kohäsivität bzw. Cohesiveness gibt an, wie gut das Produkt einer zweiten Verformung im Verhältnis zu seinem Widerstand unter der ersten Verformung standhält. Dabei wird die Fläche unter einer Kurve (J) während der zweiten Komprimierung geteilt durch die Fläche unter einer Kurve (J) während der ersten Komprimierung. Auch die Kohäsivität zeigt die sehr plastische Textur der gelierten Flüssigkeitssubstanz, welche durch die umgebende Membranhülle des Sachets in ihrer Form gehalten wird. Die Kombination aus Membranhülle und gelierter Flüssigkeitssubstanz als Kernmedium generiert die intendierte Textureigenschaft einer plastischen, straffen und robust stabilen (u.a. bissfesten) und dennoch (gelartigen) weich kaufähigen Ausgestaltungsform.

Ein Kohäsivitäts-Wert von 1 würde etwa bedeuten, dass sich die Probe zu 100 % elastisch verhält und somit bei erneuter Belastung die benötigte Energie gleichbleibt. Zum Vergleich weist ein Wiener Würstchen etwa einen Kohäsivitäts-Wert von 0.5 auf.

Es sei angemerkt, dass sich das geringfügige elastische Verhalten des Sachets auf die Gesamtkomposition aus Membran und gelierter Flüssigkeitssubstanz bezieht. Diese Eigenschaft wird bei dem erfindungsgemässen Sachet intendiert und angestrebt, da hierdurch ein gleichbleibend stabil und gleichbleibend plastisch geformtes Sachet sowohl für die Funktionseigenschaft eines optimalen Produkthandlings durch den Hundebesitzer als auch eines im Rahmen des Aufnahmeprozesses des Hundes fest zentrierten, kontrollierbaren Sachets bis zum Kau- und Verzehrprozess erreicht wird.

Ein elastisches Verhalten würde dagegen eine zu hohe Beweglichkeit des Sachets mit sich bringen, woraufhin es zum einen in Bezug auf den eingeschlossenen Gelfestkörper zum Risiko eines zu geringfügigen Gelbruchverhaltens angesichts einer zu hohen Bruchdehnungsrate, und zum anderen in Verbindung zur umschliessenden Membran zum Risiko einer zu hohen Ausdehnung mit der texturbedingten Auswirkung einer Membranschlaffheit kommen kann. Zum Beispiel weisen sowohl eine Alginathülle als auch ein aus Agar-Agar hergestelltes Hydrokolloid für sich einzeln betrachtet, ein elastisches (bei Agargel in Abhängigkeit zur Höhe der Agareinwaage; für Sachet wird bevorzugt eine weniger elastische, d.h. mehrheitlich spröde Agargel-Textur auch unabhängig von Membranhülle konzentriert) und bruchmechanisches Strukturverhalten auf, verwandeln sich in der Kombination dieser beiden Elemente jedoch zu der in den obigen Punkten bereits erläuterten physikalischen Beschaffenheit. Die für das erfindungsgemässe Sachet angestrebte, geringe Bruchdehnung bzw. Elastizität (Basis ist eine niedrige Agareinwaage wie etwa bspw. 0.7 bis 1.1 Gew.-%) des darin eingeschlossenen weich-spröden Gelfestköpers, kommt deshalb auch einer leichteren mechanischen Deformation des Gels, mit dennoch vorhandenem Gel-Zusammenhalt während einer Kau-Scherung sowie der folgenden Schluck-Scherung entgegen.

Vorzugsweise beträgt die Gumminess des Sachets, welches beispielsweise aus einer der vorgenannten Substanzen gebildet wird, von etwa 0.03 N bis etwa 11.0 N, vorzugsweise von etwa 0.3 N bis etwa 10.0 N, weiter vorzugsweise von etwa 0.5 N bis etwa 3.0 N und weiter vorzugsweise von etwa 0.7 N bis etwa 1.0 N. Die Gumminess wird üblicher Weise nur bei halbfesten Produkten gemessen und kann als Parameter verwendet werden, der den Energiebedarf für die Zerkleinerung einer Probe während des Kauens beschreibt. Berechnet wird die Gumminess als Produkt von Härte mal Kohäsivität. Die Werte für ein solches Sachet zeigen wiederum ein sprödes und weniger elastisches Verhalten, da nur ein sehr geringer Kraftaufwand notwendig ist, um die Probe um 50 % ihrer Höhe einzudrücken. Die stark ausgeprägte Sprödheit ist mitunter ein wesentlicher mechanischer Texturparameter in Anbetracht eines mit den gastrointestinalen, physikalischen Verdauungseffekten in hoher Abhängigkeit stehenden dynamischen Gelbruchverhaltens für einen (schnelleren) peristaltischen Flüssigkeitsaustritt.

Die vorstehenden, aus den texturanalytischen Untersuchungen abgeleiteten Werte zur maximalen Kraft, gesamten Kraft, Spitzenkraft, Kohäsivität und Gumminess veranschaulichen, dass die entsprechenden Sachets bevorzugt eine schnittfeste, aber gelartige, weiche Struktur aufweisen, die insbesondere für Hunde sehr einfach zu kauen ist. Würde man das Sachet mit einem Wiener Würstchen vergleichen, so läge die Bissfestigkeit bei etwa 20 %. Sehr gering gestaltet sich bevorzugt die Elastizität, welche ggf. auch nahe Null liegen kann, wohingegen eine vollelastische Probe einen Wert von 1 aufweisen würde.

Hieraus ergibt sich, dass die gelierte Flüssigkeitssubstanz, auch in geringen Konzentrationssphären in Verbindung stehend mit einer niedrigen Wasserbinde- und Wasserhaltekraft, im Inneren bevorzugt eine sehr plastische sowie spröde und dennoch stabil zusammenhaltende Textur aufweist, welche durch die sie umgebende Membran in ihrer Form gehalten wird, so dass der (weiche) Gelfestkörper nicht austreten kann. Nach dem Zerbeissen und oralen Aufbrechen der Membranhülle kann das austretende Kernmedium sehr leicht zerkaut und für den bevorstehenden Verdauungsprozess bereits zu einem bestimmten Verhältnis in kleinere Gelstücke vorgebrochen werden. Die an den homogen gelierten Inhaltskern angeglichene, um- bzw. anschliessende Membran verleiht dem Produkt eine anwendungs- und prozessbezogene sowie (bruch-)mechanische und motorische Stabilität und Festigkeit im bezugnehmenden Verhältnis zum Einsatzfeld der verzehrbaren, mobilen Flüssigkeitsversorgung und -aufnahme von insbesondere Hunden, wodurch es bei weiteren Belastungssituationen (Konfektionierung, thermischer Druck, Transport, Anfassen, Drücken) auch gut handelbar und prozessstabil ist.

Es soll an dieser Stelle nochmals darauf hingewiesen werden, dass das (konventionelle) Wiener Würstchen vorliegend rein im Sinne einer zu Orientierungszwecken eingesetzten Messskala betreffend der Interpretation der für das Sachet dargestellten Textureigenschaften herangezogen wurde, da das erfindungsgemässe Sachet ein völlig neuartiges Produktgefüge verkörpert. Das Wiener Würstchen bedient ansonsten einen gänzlich unterschiedlichen Einsatzbereich und weist ein deutlich differenziertes Ergebnis bezüglich der physikalischen Parametereigenschaften im Vergleich zu dem erfindungsgemässen Sachet auf.

Vorzugsweise umfasst das Sachet des Weiteren eine Länge von etwa 2 cm bis etwa 10 cm, vorzugsweise von 2.5 cm bis 9 cm, weiter vorzugsweise von 2.8 cm bis 8 cm, weiter vorzugsweise von 3 cm bis 7 cm und noch weiter vorzugsweise von 4 cm bis 6 cm auf, und bevorzugt einen Durchmesser von etwa 1.0 cm bis 3.0 cm, vorzugsweise von etwa 1.2 cm bis etwa 2.5 cm, weiter vorzugsweise von etwa 1.5 cm bis etwa 2.3 cm, weiter vorzugsweise von etwa 1.6 cm bis etwa 2.2 cm und noch weiter vorzugsweise von etwa 1.7 cm bis etwa 1.9 cm . Die Grösse des Sachets richtet sich in erster Linie nach der Grösse des Hundes. Die Massangaben zur Länge verstehen sich abzüglich von gegebenenfalls beidseitig angeschlossenen Abdrehstellen (bspw. bei Koextrusionssystem mit Abdrehfunktion) eines Sachets.

Ein Beispiel für eine besonders bevorzugte Ausgestaltung im Bilde einer ersten standardisierten Variante des Sachets weist etwa ein Mengenvolumen von etwa 10 cm³ auf. Bei einer ebenfalls besonders bevorzugten wurstartigen, beutelartigen, ovalartigen oder ellipsenartigen Formgebung des Sachets, wird dabei besonders bevorzugt ein Durchmesser von etwa 18 mm und eine Länge von etwa 50 mm (bzw. 55 mm von Abdrehstelle zu Abdrehstelle) gewählt. Das Portionsgewicht des Sachets, d.h. der Alginat-Membran (bspw. 0.2 mm Hüllendicke) und einer mit Agar-Agar (bspw. 0.9 Gew.-% Agareinwaage) gelierten Flüssigkeitssubstanz (bspw. Mindestvolumenanteil von 10 ml Flüssigkeit), beträgt dabei etwa 10.7 g (arithmetischer Mittelwert). In diesem Ausgestaltungsbeispiel beläuft sich das Gewicht der Alginat-Membran auf etwa 0.6 g (unter Berücksichtigung des in der Alginathülle gebundenen Feuchtigkeitsanteils). Somit liegt die darin eingeschlossene gelierte Flüssigkeit bei einem Inhaltsgewicht von etwa 10.1 g, sowie abzüglich der 0.9 Gew.-% Agar-Konzentration von etwa 10 g an rein fluider und für den Hundeorganismus zur Verfügung stehender Flüssigkeit. Demzufolge beziffert sich der Gewichtsanteil der Flüssigkeit in diesem Beispiel auf etwa mindestens 90 % (d.h. am Gesamtgewicht des Sachets). Auch kleinere Gewichtsanteile der Flüssigkeit von mindestens etwa 70 % oder aber grössere Gewichtsanteile der Flüssigkeit von mindestens etwa 95 % sind für ein erfindungsgemässes Sachet vorstellbar.

Die erfindungsgemässen Sachets können etwa mittels eines Koextrusionssystems mit leckagefreier Abdrehfunktion hergestellt werden. Eine andere Möglichkeit besteht in einem ganzheitlichen Umschliessen bzw. Einkapseln mittels eines geeigneten Encapsulators, wobei dann keine Abdrehstellen oder Nähte entstehen. In Frage kommen grundsätzlich aber sämtliche Arten von maschinellen, mechanisch-technologischen oder auch manuellen Verfahrensmethoden, welche eine Umhüllung und Verschliessung (verzehrbare Membran) eines Kernmediums (gelierte Flüssigkeitssubstanz) realisieren können.

In der nachstehenden Tabelle wird zum Zwecke der Anschaulichkeit der erfahrungsgemässe, ungefähre tägliche Nahrungs- und Flüssigkeitsbedarf für Hunde mit einem Gewicht von 5, 10 und 20 Kilogramm angegeben:

| | **5 KG** | | **10 KG** | | **20 KG** | |
|---|---|---|---|---|---|---|
| | Normal | Aktiv | Normal | Aktiv | Normal | Aktiv |
| Aktivität/ Temp. [°C] | < 20°C | < 20°C | < 20°C | < 20°C | < 20°C | < 20°C |
| | > 20°C | > 20°C | > 20°C | > 20°C | > 20°C | > 20°C |
| Trockenfutter | 200-250 ml | bis 500 ml | 400-500 ml | bis 1000 ml | 800-1000 ml | bis 2000 ml |
| | 250-500 ml | bis 750 ml | 500-1000 ml | bis 1500 ml | 1000-2000 ml | bis 3000 ml |
| Feuchtfutter | 25-50 ml | bis 250 ml | 50-100 ml | bis 500 ml | 100-200 ml | bis 1000 ml |
| | 100-250 ml | bis 500 ml | 200-500 ml | bis 1000 ml | 400-1000 ml | bis 2000 ml |

In der wiederum nachstehenden Tabelle wird der erfahrungsgemässe, ungefähre tägliche Nahrungs- und Flüssigkeitsbedarf für Hunde mit einem Gewicht von 30 und 40 Kilogramm angegeben:

| | **30 kg** | | **40 kg** | |
|---|---|---|---|---|
| | Normal | Aktiv | Normal | Aktiv |
| Aktivität/ Temp. [°C] | < 20°C | < 20°C | < 20°C | < 20°C |
| | > 20°C | > 20°C | > 20°C | > 20°C |
| Trockenfutter | 1200-1500 ml | bis 3000 ml | 1600-2000 ml | bis 4000 ml |
| | 1500-3000 ml | bis 4500 ml | 2000-4000 ml | bis 6000 ml |
| Feuchtfutter | 150-300 ml | bis 1500 ml | 200-400 ml | bis 2000 ml |
| | 600-1500 ml | bis 3000 ml | 800-2000 ml | bis 4000 ml |

Die vordosierten Sachets gemäss der vorliegenden Erfindung sind bevorzugt in Bezug auf die Inhaltsmenge an gastrointestinalen resorbierbarer und absorbierbarer Flüssigkeit aus dem gelierten Inhaltskern bzw. Hydrokolloid (Kernmedium) so ausgestaltet, dass der Hund pro ihm verabreichten Portionseinheit mit nicht zu wenig aber auch nicht zu viel Flüssigkeit versorgt wird, und dass die Anzahl und Häufigkeitsrate an durch den Hundebesitzer gegebenen Sachets individuell und selbstbestimmend an die Bedürfnisse des jeweiligen Hundes und den etwaigen externen Einflussfaktoren (Umgebungstemperatur, Aktivitätsgrad, u.v.m.) angepasst werden können. In Vergleichsstellung zu einem konventionellen Belohnungssnack weist das Sachet für die mobile Flüssigkeitsversorgung von Hunden ein hohes Inhaltsvolumen und damit auch eine hohe Nutzenkurve hervor.

Nachfolgend sollen Gründe und Folgen einer unzureichenden Flüssigkeitsaufnahme bei Hunden nochmals resümiert werden. Die hierbei angelegte Betrachtungsgrundlage nimmt Bezug auf die Verhaltensauffälligkeiten der allgemeinen Flüssigkeitsaufnahme bei Hunden.

Ein Grund für eine unzureichende Flüssigkeitsaufnahme liegt zunächst in der generellen Trinkträgheit von Hunden. Weiter zu nennen ist ein fehlendes Bewusstsein von Hund und Hundebesitzer hinsichtlich einer regelmässigen, hinreichenden Flüssigkeitsaufnahme beziehungsweise Flüssigkeitsversorgung sowie -kontrolle, vor allem in den mobilen Schnittstellen des Alltags eines Hundes. Hiermit verbunden sind auch unzureichende Aufklärungen betreffend potentieller gesundheitlicher und verhaltensverändernder (Langzeit-)Folgen für den Hund, welche sich auf Grundlage einer unzureichenden Flüssigkeitsaufnahme beziehungsweise Flüssigkeitsunterversorgung bemerkbar machen.

Weiterhin führen hohe aktivitätsbezogene Belastungsanforderungen und ein damit verbundener, hoher Bewegungsanspruch zu einer Reduzierung der im Organismus befindlichen Hydration (Flüssigkeitshaushalt) und verursachen folglich die Abnahme der Vitalität und Erzeugung einer Trägheit im Verhalten des Hundes. Geschmacks- und Geruchslosigkeit von Leitungswasser und ein damit einhergehender fehlender Trinkanreiz sind ebenfalls zu nennen sowie der Kalkgehalt im Leitungswasser, welcher oftmals die Folge einer Unverträglichkeit und einer Trinkabstinenz des Hundes mit sich bringt.

Weiterhin sind verhaltensgeprägte sowie ältere Hunde nur sehr schwer umerziehbar, vor allem im Hinblick auf eine bisher nicht vorhandene bewusste, belohnende, genussvolle und motivierende Flüssigkeitsaufnahme. Hieraus folgt, dass der Hund etwa in der mobilen Schnittstelle "Spaziergang" aus verunreinigten Pfützen oder Tümpeln trinkt oder überhaupt keine Flüssigkeit zu sich nimmt. Auch externe (Verhaltens-)Störungen des Trinkverhaltens, wie etwa eine spiegelnde Reflektion oder Geräuscherzeugungen bei stationären, bspw. mit Aluminium beschichteten Wassernäpfen, oder aber ein abweisender Plastikgeruch bei mobilen Transportbehältnissen sind Gründe für eine Trinkabstinenz. Auch eine fehlende Belohnungs- und Mobilitätsassoziation, vor dem Hintergrund, dass nach dem heutigen Status Quo der verfügbaren Produktlösungen die mobile Flüssigkeitsaufnahme und - versorgung sowohl aus Sicht des Hundes, als auch aus Sicht des Hundebesitzers, keine Belohnung und damit auch kein mobiles Instrument darstellt, mit welchem der Hundebesitzer den Hund zur regelmässigen Flüssigkeitsaufnahme animieren und erinnern kann, ist ein nicht zu unterschätzender Aspekt.

Im Hinblick auf die bis dato verfügbaren mobilen Lösungen für die Flüssigkeitsversorgung von Hunden wird der Hund eine gleichartige Verhaltensauffälligkeit wie bei der stationären Flüssigkeitsversorgung aufweisen, im Sinne dessen, dass er diese nicht als belohnendes, differenziertes Instrument wahrnimmt. Mit der hier bezeichneten Erfindung generiert sich erstmalig die Produktgattung einer "verzehrbaren (mobilen) Flüssigkeitsaufnahme" für Hunde.

Die Zielsetzung des erfindungsgemässen "Sachets" ist es aber nicht die stationäre Flüssigkeitsversorgung des Hundes abzudecken oder zu ersetzen, sondern ein effektives Ergänzungsprodukt für die Abdeckung der notwendig aufzunehmenden Flüssigkeitsmenge eines Hundes pro Tag bereitzustellen und primär in den mobilen Alltagsbereichen als (mobile) Hydrationsquelle Hunden und Hundebesitzern erstmalig multitäglich integrierbar zu machen. Zudem wird fokussiert, den Hund durch die inhaltliche Zusammensetzung des Sachets (z.B. salzhaltiger Calciumchlorid-Anteil in vernetzter Alginatmembran sowie etwa ein auf den Hundeorganismus angepasster Salzgehalt hinsichtlich einer beispielhaften Ausgestaltungsform mit einer Knochenbrühe), unter Berücksichtigung der Häufigkeitsrate und Anzahl an vom Hund verzehrten Sachets pro Tag, potenziell ergänzend zur Intensivierung der stationären Flüssigkeitsaufnahme zu animieren.

Schliesslich muss auch die Parameterkomplexität bezüglich individueller Mengenunterschiede des Flüssigkeitstagesbedarfs sowie unter anderem auch situativen Mengenveränderungen eines Hundes berücksichtigt werden (bspw. steigt der Aktivitätsgrad und/oder die Umgebungstemperatur an, steigt hierzu simultan auch der Flüssigkeitsbedarf an). Hierzu zählen vor allem die Parameter wie etwa Grösse, Körpergewicht, Temperatur (Jahreszeit), Altersstand, Bewegungsanspruch (Aktivität in der mobilen Schnittstelle), einem Flüssigkeitsverlust aufgrund von abführenden Beeinträchtigungen oder Krankheitsbildern (Durchfall, Nierenerkrankung, Fieber, Diabetes Mellitus, u.v.m.) und dem sich in der jeweiligen Futterart (Nassfutter, Trockenfutter oder BARF) befindenden Flüssigkeits- bzw. Feuchtigkeitsgehalt bzw. der manuell beigegebenen Flüssigkeitsmenge wie etwa bei Trockenfutter und den in der etwaigen Futterart befindenden flüssigkeitsentziehenden Bestandteilen sowie der tagesbezogenen Fütterungshäufigkeit. Weiter besteht das Faktum, dass Hunde den Mindestbedarf an Flüssigkeit über den Hundealltag hinweg, und den in den mobilen Alltagsschnittstellen aufkommenden Hydrations-bedarf, nicht erreichen (können).

Eine regelmässige, ausreichende und kontrollierbare Flüssigkeitsversorgung, bestehend aus einer direkten Korrelation von mobiler und stationärer Hydration, ist für den Hund von ausserordentlicher Wichtigkeit. Das Grundbedürfnis einer hinreichenden, regelmässigen Flüssigkeitsaufnahme ist gerade für die Vitalität (Wohlbefinden) und Gesundheit der Hunde essenziell, da Wasser bzw. Flüssigkeit multiple Funktionseigenschaften vereint. Sie ist für den Grossteil aller Vorgänge im Körper von relevanter Bedeutung, da dieser bei Hunden zu 70 bis 80 % aus Wasser besteht. Die Flüssigkeitsversorgung ist ausserdem unentbehrlich für die Lösung der Futterbestandteile im Verdauungstrakt, für den Transport der wichtigen Nährstoffe aus dem Darmbereich über die Blutbahn zu den Geweben und darüber hinaus ist sie für den Zellstoffwechsel und für die Ausscheidung von harnpflichtigen Stoffen über die Nieren verantwortlich.

Zudem wird über die Flüssigkeitszufuhr die Körpertemperatur geregelt und sie dient dadurch der Stillung eines im Zuge einer hohen physischen Belastung oder einer hohen Temperatureinwirkung auf den Hundeorganismus auftretenden Hechelverhaltens mit der Zieleigenschaft einer Durststillung und Kreislaufstabilisierung. Insbesondere an klimatisch hitzigen Tagen sollten Hunde etwa alle 30 Minuten Flüssigkeit zu sich nehmen. Diese Notwendigkeit ist vor allem im Rahmen mobiler Schnittstellen, wie bei langen Spaziergängen, noch dringlicher zu beachten. Hier herrscht ein akut bestehendes Durstgefühl, welches mit dem erfindungsgemässen Sachet effektiv bzw. präventiv gestillt bzw. verhindert werden kann.

Die auf diese Weise erzielbaren positiven Auswirkungen einer ausreichenden Flüssigkeitsversorgung von Hunden umfassen eine konstante Hydrierung, Agilität, Vitalität, eine gestärkte physiologische als auch energetische Gesundheit, Verdauungsförderung, eine Stärkung des Kreislaufs sowie eine generelle Verbesserung der im Hundeorganismus ablaufenden Prozesse.

Das erfindungsgemässe Sachet eignet sich im Übrigen auch als Transportmedium (Wirkstoff-Einschluss und Wirkstoff-Dissolution) für insbesondere flüssige oder pulverförmige veterinärmedizinische Produkte. Zudem können ggf. auch Tabletten in das gelierte Kernmedium eingedrückt werden, um die Verabreichung für den Hundebesitzer zu erleichtern.

Durch die Erfindung der "Sachets" wird die mobile Flüssigkeitsaufnahme für den Hund in den mobilen Schnittstellen zu einem hydrierenden, durstillenderfrischenden, (prä-)oral kontrollierbaren, belohnenden und jederzeit zugänglichen Erlebnis. Das Sachet ermöglicht die Flüssigkeitsversorgung von Hunden durch ein einfach, handlich (mobil) und flexibel anwendbares, kontrollierbares, sich in einem einzigen Medium befindenden Versorgungsinstruments für den Hundebesitzer.

### Kurze Beschreibung der Zeichnungen

Weitere vorteilhafte Ausgestaltungen der Erfindung ergeben sich aus der nachfolgenden Beschreibung von Ausführungsbeispielen der Erfindung mit Hilfe der schematischen Zeichnung. Insbesondere wird im Folgenden das erfindungsgemässe Sachet unter Bezugnahme auf die beigefügten Zeichnungen anhand von Ausführungsbeispielen detaillierter beschrieben. Es zeigen:
- Fig. 1:: eine Querschnittsansicht durch das erfindungsgemässe Sachet; und
- Fig. 2:: eine Seitenansicht des erfindungsgemässen Sachets.

### Weg(e) zur Ausführung der Erfindung

Bestimmte Ausdrücke werden in der folgenden Beschreibung ggf. aus praktischen Gründen verwendet und sind nicht einschränkend zu verstehen. Die Wörter "rechts", "links", "unten" und "oben" bezeichnen Richtungen in der Zeichnung, auf die Bezug genommen wird. Die Ausdrücke "nach innen", "nach aussen" "unterhalb", "oberhalb", "links", "rechts" oder ähnliche werden zur Beschreibung der Anordnung bezeichneter Teile zueinander, der Bewegung bezeichneter Teile zueinander und der Richtungen hin zum oder weg vom geometrischen Mittelpunkt der Erfindung sowie benannter Teile derselben wie in den Figuren dargestellt verwendet. Diese räumlichen Relativangaben umfassen auch andere Positionen und Ausrichtungen als die in den Figuren dargestellten. Zum Beispiel wenn ein in den Figuren dargestelltes Teil umgedreht wird, sind Elemente oder Merkmale, die als "unterhalb" beschrieben sind, dann "oberhalb". Die Terminologie umfasst die oben ausdrücklich erwähnten Wörter, Ableitungen von denselben und Wörter ähnlicher Bedeutung.

Um Wiederholungen in den Figuren und der zugehörigen Beschreibung der verschiedenen Aspekte und Ausführungsbeispiele zu vermeiden, sollen bestimmte Merkmale als gemeinsam für verschieden Aspekte und Ausführungsbeispiele verstanden werden. Das Weglassen eines Aspekts in der Beschreibung oder einer Figur lässt nicht darauf schliessen, dass dieser Aspekt in dem zugehörigen Ausführungsbeispiel fehlt. Vielmehr kann ein solches Weglassen der Klarheit und dem Verhindern von Wiederholungen dienen. In diesem Zusammenhang gilt für die gesamte weitere Beschreibung folgende Festlegung: Sind in einer Figur zum Zweck zeichnerischer Eindeutigkeit Bezugszeichen enthalten, aber im unmittelbar zugehörigen Beschreibungstext nicht erwähnt, so wird auf deren Erläuterung in vorangehenden Figurenbeschreibungen Bezug genommen. Sind ausserdem im unmittelbar zu einer Figur gehörigen Beschreibungstext Bezugszeichen erwähnt, die in der zugehörigen Figur nicht enthalten sind, so wird auf die vorangehenden und nachstehenden Figuren verwiesen. Ähnliche Bezugszeichen in zwei oder mehreren Figuren stehen für ähnliche oder gleiche Elemente.

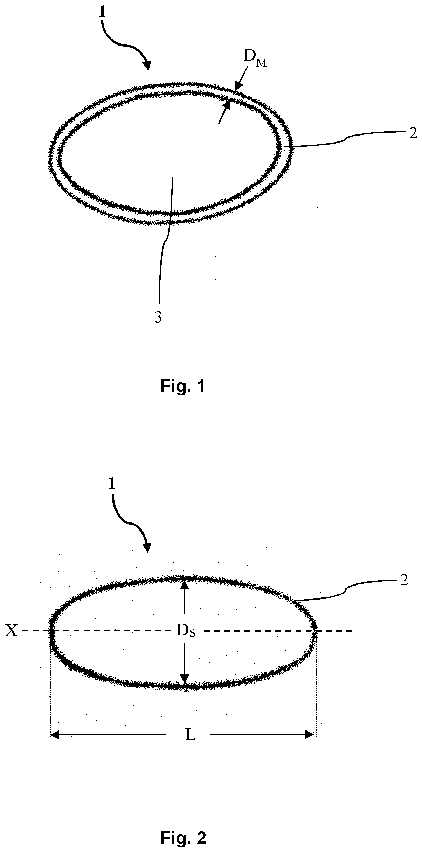

In **Fig. 1** wird ein erfindungsgemässes Sachet 1 mit einer die gelierte Flüssigkeitssubstanz 3 (bzw. das Kernmedium) umgebenden Membran 2 (bzw. Umhüllung) im Querschnitt veranschaulicht. Die Membran 2 weist eine Dicke D_{M} auf. Die Membran 2 kann dabei einschichtig, zweischichtig oder multischichtig ausgebildet sein.

In **Fig. 2** wird das erfindungsgemässe Sachet 1 gemäss **Fig.1** in der Seitenansicht veranschaulicht. Das Sachet 1 weist eine Länge L entlang der Längsachse X auf sowie, rechtwinklig und mittig dazu, einen Durchmesser Ds. Der Schnitt für die Ansicht gemäss **Fig.1** verläuft etwa entlang dem Doppelpfeil für den Durchmesser Ds. Das Sachet 1 weist in diesem Ausführungsbeispiel eine wurstartige, beutelartige, ovalartige bzw. ellipsenartige Form auf. Das Sachet ist in diesem Ausführungsbeispiel ganzheitlich eingekapselt und weist insofern keine Abdrehstellen an seinen Längsenden auf.

Die vorliegende Offenbarung umfasst auch Ausführungsformen mit jeglicher Kombination von Merkmalen, die vorstehend oder nachfolgend zu verschiedenen Ausführungsformen genannt oder gezeigt sind. Sie umfasst ebenfalls einzelne Merkmale in den Figuren, auch wenn sie dort im Zusammenhang mit anderen Merkmalen gezeigt sind und/oder vorstehend oder nachfolgend nicht genannt sind. Auch können die in den Figuren und der Beschreibung beschriebenen Alternativen von Ausführungsformen und einzelne Alternativen deren Merkmale vom Erfindungsgegenstand beziehungsweise von den offenbarten Gegenständen ausgeschlossen sein. Die Offenbarung umfasst Ausführungsformen, die ausschliesslich die in den Ansprüchen beziehungsweise in den Ausführungsbeispielen beschriebenen Merkmale umfasst sowie auch solche, die zusätzliche andere Merkmale umfassen.

Im Weiteren schliesst der Ausdruck "umfassen" und Ableitungen davon andere Elemente oder Schritte nicht aus. Ebenfalls schliesst der unbestimmte Artikel "ein" bzw. "eine" und Ableitungen davon eine Vielzahl nicht aus. Die Funktionen mehrerer in den Ansprüchen aufgeführter Merkmale können durch eine Einheit beziehungsweise einen Schritt erfüllt sein. Die Begriffe "im Wesentlichen", "etwa", "ungefähr" und dergleichen in Verbindung mit einer Eigenschaft beziehungsweise einem Wert definieren insbesondere auch genau die Eigenschaft beziehungsweise genau den Wert. Die Begriffe "etwa" und "ungefähr" im Zusammenhang mit einem gegebenen Zahlenwert oder -bereich kann sich auf einen Wert beziehungsweise Bereich beziehen, der innerhalb 20%, innerhalb 10%, innerhalb 5% oder innerhalb 2% des gegebenen Werts beziehungsweise Bereichs liegt.

### Liste der Bezugszeichen:

- 1: Sachet
- 2: Membran (Umhüllung)
- 3: gelierte Flüssigkeitssubstanz (Kernmedium)
- L: Länge Sachet
- D_{M}: Dicke Membran
- D_{S}: Durchmesser Sachet
- X: Längsachse Sachet

## Patentansprüche

1. Sachet (1) für eine mobile Flüssigkeitsversorgung von insbesondere Hunden, mit einer Umhüllung (2) sowie einem von der Umhüllung umschlossenen Kernmedium (3), wobei
die Umhüllung (2) aus einer verzehrbaren Membran gebildet ist, und wobei
das Kernmedium (3) aus einer gelierten Flüssigkeitssubstanz gebildet ist, wobei
eine maximale Kraft zum Durchschneiden des Sachets (1) in einem Bereich von etwa 1 N bis etwa 24 N liegt, und wobei
eine gesamte Kraft zum Durchschneiden des Sachets (1) in einem Bereich von etwa 0.01 J bis etwa 0.22 J liegt.

2. Sachet (1) gemäss Anspruch 1, **dadurch gekennzeichnet, dass** die verzehrbare Membran ein Polymer, vorzugsweise Alginat, umfasst.

3. Sachet (1) gemäss Anspruch 2, **dadurch gekennzeichnet, dass** das Alginat mit einer Calciumchlorid-Lösung vernetzt ist.

4. Sachet (1) gemäss Anspruch 2 oder 3, **dadurch gekennzeichnet, dass** das Alginat aus einer Alginatpaste gebildet ist, welche Natriumalginat enthält.

5. Sachet (1) gemäss einem der vorhergehenden Ansprüche, **dadurch gekennzeichnet, dass** die verzehrbare Membran eine Dicke (D_{M}) von etwa 0.05 mm bis etwa 5 mm, vorzugsweise von etwa 0.1 mm bis etwa 2 mm, bevorzugter von 0.15 mm bis 1.5 mm und noch bevorzugter von etwa 0.2 mm bis etwa 1 mm aufweist.

6. Sachet (1) gemäss einem der vorhergehenden Ansprüche, **dadurch gekennzeichnet, dass** die gelierte Flüssigkeitssubstanz insbesondere Suppen, Brühen oder Smoothies auf tierischer, biologisch pflanzlicher, vegetarischer oder veganer Basis umfasst, oder Trinkwasser, Hydrogele, Joghurtgetränke, Shakes, Säfte, Tees oder Flüssigkeitsergänzungsmittel.

7. Sachet (1) gemäss einem der vorhergehenden Ansprüche, **dadurch gekennzeichnet, dass** die gelierte Flüssigkeitssubstanz mittels von Geliermitteln wie insbesondere Agar-Agar, Gelatine, Alginat, Carrageen, Pektin oder Traganth geliert ist und/oder mittels von Binde- und Verdickungsmitteln wie insbesondere Johannisbrotkernmehl, Guarkernmehl, Pfeilwurzelmehl, Flohsamenschalen, Maisstärke, Kartoffelstärke, Xanthan, Gummi Arabicum, Tarakernmehl oder Gellan.

8. Sachet (1) gemäss einem der vorhergehenden Ansprüche, **dadurch gekennzeichnet, dass** das Volumen des Sachets (1) einen Bereich von etwa 2 cm³ bis etwa 35 cm³, vorzugsweise von etwa 2.5 cm³ bis etwa 30 cm³, bevorzugter von etwa 2.8 cm³ bis etwa 25 cm³, weiter vorzugsweise von etwa 3 cm³ bis etwa 20 cm³ und noch weiter vorzugsweise von etwa 5 cm³ bis etwa 15 cm³ umfasst.

9. Sachet (1) gemäss einem der vorhergehenden Ansprüche, **dadurch gekennzeichnet, dass** eine maximale Kraft zum Durchschneiden des Sachets (1) in einem Bereich von etwa 2 N bis etwa 20 N, vorzugsweise von etwa 3 N bis etwa 15 N und weiter vorzugsweise in einem Bereich von etwa 4 bis etwa 9 N, liegt.

10. Sachet (1) gemäss einem der vorhergehenden Ansprüche, **dadurch gekennzeichnet, dass** eine gesamte Kraft zum Durchschneiden des Sachets (1) in einem Bereich von etwa 0.05 J bis etwa 0.25 J, vorzugsweise in einem Bereich von etwa 0.1 J bis etwa 0.2 J und weiter vorzugsweise in einem Bereich von etwa 0.125 J bis etwa 0.15 J, liegt.

11. Sachet (1) gemäss einem der vorhergehenden Ansprüche, **dadurch gekennzeichnet, dass** die Spitzenkraft für ein erstes Komprimieren des Sachets (1) um 50 % seiner Höhe von etwa 3 N bis etwa 25 N, vorzugsweise von etwa 5 N bis etwa 15 N, weiter vorzugsweise von etwa 9 N bis etwa 12 N und noch bevorzugter von etwa 10 N bis etwa 11 N beträgt und dass bevorzugt die Spitzenkraft für ein zweites Komprimieren des Sachets (1) um 50 % seiner Höhe von etwa 0.05 N bis etwa 6 N, vorzugsweise von etwa 1 N bis etwa 5 N, weiter vorzugsweise von etwa 2 N bis etwa 4 N und noch weiter vorzugsweise von etwa 3.0 N bis etwa 3.3 N, beträgt.

12. Sachet (1) gemäss einem der vorhergehenden Ansprüche, **dadurch gekennzeichnet, dass** die Kohäsivität des Sachets (1) von etwa 0.01 bis etwa 0.4, vorzugsweise von etwa 0.03 bis etwa 0.3, weiter vorzugsweise von etwa 0.05 bis etwa 0.2 und noch weiter vorzugsweise von etwa 0.06 bis etwa 0.10, beträgt.

13. Sachet (1) gemäss einem der vorhergehenden Ansprüche, **dadurch gekennzeichnet, dass** Gumminess des Sachets (1) von etwa 0.03 N bis etwa 11 N, vorzugsweise von etwa 0.3 N bis etwa 10.0 N, weiter vorzugsweise von etwa 0.5 N bis etwa 3.0 N und noch weiter vorzugsweise von etwa 0.7 N bis etwa 1.0 N, beträgt.

14. Sachet (1) gemäss einem der vorhergehenden Ansprüche, **dadurch gekennzeichnet, dass** es eine Länge (L) von etwa 2 cm bis etwa 10 cm, vorzugsweise von etwa 2.5 cm bis etwa 9 cm, bevorzugter von etwa 2.8 cm bis etwa 8 cm, weiter vorzugsweise von 3 cm bis 7 cm und weiter vorzugsweise von 4 bis 6 cm, aufweist und bevorzugt einen Durchmesser (Ds) von etwa 1.0 cm bis 3.0 cm, vorzugsweise von etwa 1.2 cm bis etwa 2.5 cm, weiter vorzugsweise von etwa 1.5 cm bis etwa 2.3 cm, weiter vorzugsweise von etwa 1.6 cm bis etwa 2.2 cm und noch weiter vorzugsweise von etwa 1.7 cm bis etwa 1.9 cm, aufweist.

15. Sachet (1) gemäss einem der vorhergehenden Ansprüche, **dadurch gekennzeichnet, dass** der Gewichtsanteil der Flüssigkeit am Gesamtgewicht des Sachets mindestens etwa 70 %, vorzugsweise mindestens etwa 90 % und weiter vorzugsweise mindestens etwa 95 % beträgt.

## Claims

1. Sachet (1) for a mobile liquid supply for dogs in particular, comprising a casing (2) and a core medium (3) enclosed by said casing, wherein
the casing (2) is formed from an edible membrane, and wherein
the core medium (3) is formed from a gelled liquid substance, wherein
a maximum force for cutting the sachet (1) is in a range of approximately 1 N to approximately 24 N, and wherein
a total force for cutting the sachet (1) is in a range of approximately 0.01 J to approximately 0.22 J.

2. Sachet (1) according to claim 1, **characterized in that** the edible membrane comprises a polymer, preferably alginate.

3. Sachet (1) according to claim 2, **characterized in that** the alginate is crosslinked with a calcium chloride solution.

4. Sachet (1) according to claim 2 or 3, **characterized in that** the alginate is formed from an alginate paste containing sodium alginate.

5. Sachet (1) according to any of the preceding claims, **characterized in that** the edible membrane has a thickness (D_{M}) of from approximately 0.05 mm to approximately 5 mm, preferably from approximately 0.1 mm to approximately 2 mm, more preferably from 0.15 mm to 1.5 mm, and even more preferably from approximately 0.2 mm to approximately 1 mm.

6. Sachet (1) according to any of the preceding claims, **characterized in that** the gelled liquid substance comprises in particular soups, broths or smoothies on an animal, organic plant, vegetarian or vegan basis, or drinking water, hydrogels, yogurt drinks, shakes, juices, teas or liquid supplements.

7. Sachet (1) according to any of the preceding claims, **characterized in that** the gelled liquid substance is gelled by means of gelling agents such as in particular agar-agar, gelatin, alginate, carrageenan, pectin or tragacanth and/or by means of binding and thickening agents such as in particular locust bean gum, guar gum, arrowroot gum, psyllium husks, corn starch, potato starch, xanthan gum, gum arabic, tara gum or gellan.

8. Sachet (1) according to any of the preceding claims, **characterized in that** the volume of the sachet (1) is in a range from approximately 2 cm³ to approximately 35 cm³, preferably from approximately 2.5 cm³ to approximately 30 cm³, more preferably from approximately 2.8 cm³ to approximately 25 cm³, more preferably from approximately 3 cm³ to approximately 20 cm³, and even more preferably from approximately 5 cm³ to approximately 15 cm³.

9. Sachet (1) according to any of the preceding claims, **characterized in that** a maximum force for cutting the sachet (1) is in a range from approximately 2 N to approximately 20 N, preferably from approximately 3 N to approximately 15 N, and more preferably in a range from approximately 4 to approximately 9 N.

10. Sachet (1) according to any of the preceding claims, **characterized in that** a total force for cutting the sachet (1) is in a range from approximately 0.05 J to approximately 0.25 J, preferably in a range from approximately 0.1 J to approximately 0.2 J, and more preferably in a range from approximately 0.125 J to approximately 0.15 J.

11. Sachet (1) according to any of the preceding claims, **characterized in that** the peak force for a first compression of the sachet (1) by 50% of its height is from approximately 3 N to approximately 25 N, preferably from approximately 5 N to approximately 15 N, more preferably from approximately 9 N to approximately 12 N, and even more preferably from approximately 10 N to approximately 11 N, and that preferably the peak force for a second compression of the sachet (1) by 50% of its height is from approximately 0.05 N to approximately 6 N, preferably from approximately 1 N to approximately 5 N, more preferably from approximately 2 N to approximately 4 N, and even more preferably from approximately 3.0 N to approximately 3.3 N.

12. Sachet (1) according to any of the preceding claims, **characterized in that** the cohesiveness of the sachet (1) is from approximately 0.01 to approximately 0.4, preferably from approximately 0.03 to approximately 0.3, more preferably from approximately 0.05 to approximately 0.2, and even more preferably from approximately 0.06 to approximately 0.10.

13. Sachet (1) according to any of the preceding claims, **characterized in that** rubberiness of the sachet (1) is from approximately 0.03 N to approximately 11 N, preferably from approximately 0.3 N to approximately 10.0 N, more preferably from approximately 0.5 N to approximately 3.0 N, and even more preferably from approximately 0.7 N to approximately 1.0 N.

14. Sachet (1) according to any of the preceding claims, **characterized in that** it has a length (L) of from approximately 2 cm to approximately 10 cm, preferably from approximately 2.5 cm to approximately 9 cm, more preferably from approximately 2.8 cm to approximately 8 cm, more preferably from 3 cm to 7 cm, and still more preferably from 4 to 6 cm, and preferably has a diameter (Ds) of approximately 1.0 cm to 3.0 cm, preferably from approximately 1.2 cm to approximately 2.5 cm, more preferably from approximately 1.5 cm to approximately 2.3 cm, more preferably from approximately 1.6 cm to approximately 2.2 cm, and even more preferably from approximately 1.7 cm to approximately 1.9 cm.

15. Sachet (1) according to any of the preceding claims, **characterized in that** the proportion by weight of the liquid to the total weight of the sachet is at least approximately 70%, preferably at least approximately 90%, and more preferably at least approximately 95%.

## Revendications

1. Sachet (1) pour un approvisionnement en liquide mobile, en particulier pour des chiens, comportant une enveloppe (2) ainsi qu'un milieu central (3) entouré par l'enveloppe, dans lequel
l'enveloppe (2) est formée à partir d'une membrane consommable, et dans lequel
le milieu central (3) est formé à partir d'une substance liquide gélifiée, dans lequel
une force maximale pour couper le sachet (1) se situe dans une plage allant d'environ 1 N à environ 24 N, et dans lequel
une force totale pour couper le sachet (1) se situe dans une plage allant d'environ 0,01 J à environ 0,22 J.

2. Sachet (1) selon la revendication 1, **caractérisé en ce que** la membrane consommable comprend un polymère, de préférence de l'alginate.

3. Sachet (1) selon la revendication 2, **caractérisé en ce que** l'alginate est réticulé avec une solution de chlorure de calcium.

4. Sachet (1) selon la revendication 2 ou 3, **caractérisé en ce que** l'alginate est formé à partir d'une pâte d'alginate qui contient de l'alginate de sodium.

5. Sachet (1) selon l'une des revendications précédentes,
**caractérisé en ce que** la membrane consommable présente une épaisseur (D_{M}) allant d'environ 0,05 mm à environ 5 mm, de préférence d'environ 0,1 mm à environ 2 mm, plus préférablement de 0,15 mm à 1,5 mm et encore plus préférablement d'environ 0,2 mm à environ 1 mm.

6. Sachet (1) selon l'une des revendications précédentes,
**caractérisé en ce que** la substance liquide gélifiée comprend en particulier des soupes, des bouillons ou des smoothies à base animale, biologiquement végétale, végétarienne ou végétalienne, ou de l'eau potable, des hydrogels, des boissons au yaourt, des boissons frappées, des jus, des thés ou des compléments liquides.

7. Sachet (1) selon l'une des revendications précédentes,
**caractérisé en ce que** la substance liquide gélifiée est gélifiée au moyen d'agents gélifiants tels que, en particulier, l'agar-agar, la gélatine, l'alginate, la carraghénine, la pectine ou la gomme adragante et/ou au moyen d'agents liants et épaississants tels que, en particulier, la farine de graines de caroube, la farine de graines de guar, la farine d'arrow-root, les enveloppes de psyllium, l'amidon de maïs, la fécule de pomme de terre, la gomme xanthane, la gomme arabique, la farine de graines de tara ou la gomme gellane.

8. Sachet (1) selon l'une des revendications précédentes,
**caractérisé en ce que** le volume du sachet (1) comprend une plage allant d'environ 2 cm³ à environ 35 cm³, de préférence d'environ 2,5 cm³ à environ 30 cm³, plus préférablement d'environ 2,8 cm³ à environ 25 cm³, encore plus préférablement d'environ 3 cm³ à environ 20 cm³ et particulièrement préférablement d'environ 5 cm³ à environ 15 cm³.

9. Sachet (1) selon l'une des revendications précédentes,
**caractérisé en ce qu'**une force maximale pour couper le sachet (1) se situe dans une plage allant d'environ 2 N à environ 20 N, de préférence d'environ 3 N à environ 15 N, et plus préférablement dans une plage allant d'environ 4 à environ 9 N.

10. Sachet (1) selon l'une des revendications précédentes,
**caractérisé en ce qu'**une force totale pour couper le sachet (1) se situe dans une plage allant d'environ 0,05 J à environ 0,25 J, de préférence dans une plage allant d'environ 0,1 J à environ 0,2 J, et plus préférablement dans une plage allant d'environ 0,125 J à environ 0,15 J.

11. Sachet (1) selon l'une des revendications précédentes,
**caractérisé en ce que** la force de pointe pour une première compression du sachet (1) de 50 % de sa hauteur va d'environ 3 N à environ 25 N, de préférence d'environ 5 N à environ 15 N, plus préférablement d'environ 9 N à environ 12 N et encore plus préférablement d'environ 10 N à environ 11 N et **en ce que**, de préférence, la force de pointe pour une seconde compression du sachet (1) de 50 % de sa hauteur va d'environ 0,05 N à environ 6 N, de préférence d'environ 1 N à environ 5 N, plus préférablement d'environ 2 N à environ 4 N et encore plus préférablement d'environ 3,0 N à environ 3,3 N.

12. Sachet (1) selon l'une des revendications précédentes,
**caractérisé en ce que** la cohésivité du sachet (1) va d'environ 0,01 à environ 0,4, de préférence d'environ 0,03 à environ 0,3, plus préférablement d'environ 0,05 à environ 0,2 et encore plus préférablement d'environ 0,06 à environ 0,10.

13. Sachet (1) selon l'une des revendications précédentes,
**caractérisé en ce que** l'élasticité du sachet (1) va d'environ 0,03 N à environ 11 N, de préférence d'environ 0,3 N à environ 10,0 N, plus préférablement d'environ 0,5 N à environ 3,0 N et encore plus préférablement d'environ 0,7 N à environ 1,0 N.

14. Sachet (1) selon l'une des revendications précédentes,
**caractérisé en ce qu'**il présente une longueur (L) allant d'environ 2 cm à environ 10 cm, de préférence d'environ 2,5 cm à environ 9 cm, plus préférablement d'environ 2,8 cm à environ 8 cm, encore plus préférablement de 3 cm à 7 cm et encore plus préférablement de 4 à 6 cm, et de préférence présente un diamètre (Ds) allant d'environ 1,0 cm à 3,0 cm, de préférence d'environ 1,2 cm à environ 2,5 cm, encore plus préférablement d'environ 1,5 cm à environ 2,3 cm, encore plus préférablement d'environ 1,6 cm à environ 2,2 cm et particulièrement préférablement d'environ 1,7 cm à environ 1,9 cm.

15. Sachet (1) selon l'une des revendications précédentes,
**caractérisé en ce que** la proportion en poids du liquide par rapport au poids total du sachet est d'au moins environ 70 %, de préférence d'au moins environ 90 %, et plus préférablement d'au moins environ 95 %.
